(19) **Europäisches Patentamt / European Patent Office / Office européen des brevets**

(11) **EP 4 554 222 A1**

(12) **EUROPEAN PATENT APPLICATION**
published in accordance with Art. 153(4) EPC

(43) Date of publication:
14.05.2025 Bulletin 2025/20

(21) Application number: 23835836.0

(22) Date of filing: 05.07.2023

(51) International Patent Classification (IPC):
H04N 19/577 (2014.01)    H04N 19/513 (2014.01)
H04N 19/105 (2014.01)    H04N 19/157 (2014.01)
H04N 19/176 (2014.01)

(52) Cooperative Patent Classification (CPC):
H04N 19/105; H04N 19/157; H04N 19/176;
H04N 19/513; H04N 19/577

(86) International application number:
PCT/KR2023/009520

(87) International publication number:
WO 2024/010370 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  05.07.2022  US 202263358520 P
13.10.2022  US 202263415959 P

(71) Applicant: **LG Electronics Inc.**
Yeongdeungpo-gu
Seoul 07336 (KR)

(72) Inventors:
• **JANG, Hyeong Moon**
  Seoul 06772 (KR)
• **NAM, Jung Hak**
  Seoul 06772 (KR)

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD BASED ON BIDIRECTIONAL INTER PREDICTION, METHOD FOR TRANSMITTING BITSTREAM, AND RECORDING MEDIUM HAVING BITSTREAM STORED THEREIN**

(57)    An image encoding/decoding method, a bitstream transmission method, and a computer-readable recording medium for storing a bitstream are provided. The image decoding method according to the present disclosure relates to an image decoding method performed by an image decoding device, and may comprise the steps of: reconstructing a picture from a bitstream; and transforming the reconstructed picture on the basis of one of at least one candidate transform, wherein the at least one candidate transform corresponds to a rotation transform or symmetric transform for the picture.

FIG. 25

EP 4 554 222 A1

## Description

### Technical Field

The present disclosure relates to an image encoding/decoding method, a method of transmitting a bitstream and a recording medium storing a bitstream, and, more particularly, to a method of generating a prediction block in an AMVP mode and a merge mode in order to generate bidirectional inter prediction.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to propose an amvpMerge mode in which an arbitrary prediction direction is predicted in an AMVP mode and another prediction direction is predicted in a merge mode.

In addition, an object of the present disclosure is to propose a method of constructing a reference picture list for an amvpMerge mode.

In addition, an object of the present disclosure is to propose a method of constructing a merge candidate list for an amvpMerge mode.

In addition, an object of the present disclosure is to propose a method of reordering a merge candidate list for an amvpMerge mode.

In addition, an object of the present disclosure is to propose a motion information refinement method for an amvpMerge mode.

In addition, an object of the present disclosure is to propose a bidirectional motion information derivation method for an amvpMerge mode.

In addition, an object of the present disclosure is to provide a non-transitory computer-readable recording medium storing a bitstream generated by an image encoding method according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise determining prediction modes respectively applied to prediction directions of a current block, the prediction modes including an advanced motion vector prediction (AMVP) mode and a merge mode, generating prediction blocks for the prediction directions, based on at least one reference picture set, at least one AMVP candidate and at least one merge candidate, and deriving a prediction block of the current block based on the prediction blocks. Among the prediction directions, a prediction mode of a certain prediction direction may be determined to be the AMVP mode and a prediction mode of the other prediction direction may be determined to be the merge mode.

An image encoding method according to another aspect of the present disclosure is an image encoding method performed by an image encoding apparatus. The image encoding method may comprise determining prediction modes respectively applied to prediction directions of a current block, the prediction modes including an advanced motion vector prediction (AMVP) mode and a merge mode, generating prediction blocks for the prediction directions, based on at least one reference picture set, at least one AMVP candidate and at least one merge candidate, and deriving a prediction block of the current block based on the prediction blocks. Among the prediction directions, a prediction mode of a certain prediction direction may be determined to be the AMVP mode and a prediction mode of the other prediction direction may be determined to be the merge mode.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, a more accurate prediction block can be generated by predicting an arbitrary prediction direction in an AMVP mode and predicting another prediction direction in a merge mode.

Also, according to the present disclosure, compression efficiency can be improved through slice-level processing and low-level processing for a low delay slice.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a flowchart illustrating an image encoding/decoding method according to another embodiment of the present disclosure.

FIGS. 5a and 5b are flowcharts illustrating an image encoding/decoding method according to another embodiment of the present disclosure.

FIGS. 6a and 6b are flowcharts illustrating an image encoding/decoding method according to another embodiment of the present disclosure.

FIG. 7 is a flowchart illustrating an image encoding/decoding method according to another embodiment of the present disclosure.

FIG. 8 is a flowchart illustrating an image encoding/decoding method according to another embodiment of the present disclosure.

FIGS. 9a and 9b are flowcharts illustrating an image encoding/decoding method according to another embodiment of the present disclosure.

FIG. 10 is a flowchart illustrating an image encoding/decoding method according to another embodiment of the present disclosure.

FIG. 11 is a flowchart illustrating an image encoding/decoding method according to another embodiment of the present disclosure.

FIGS. 12a and 12b are flowcharts illustrating an image encoding/decoding method according to another embodiment of the present disclosure.

FIGS. 13a and 13b are flowcharts illustrating an image encoding/decoding method according to another embodiment of the present disclosure.

FIG. 14 is a flowchart illustrating an image encoding/decoding method according to another embodiment of the present disclosure.

FIG. 15 is a flowchart illustrating an image encoding/decoding method according to another embodiment of the present disclosure.

FIG. 16 is a flowchart illustrating an image encoding/decoding method according to another embodiment of the present disclosure.

FIG. 17 is a flowchart illustrating an image encoding/decoding method according to another embodiment of the present disclosure.

FIGS. 18a and 18b are flowcharts illustrating an image encoding/decoding method according to another embodiment of the present disclosure.

FIG. 19 is a flowchart illustrating an image encoding/decoding method according to another embodiment of the present disclosure.

FIGS. 20a and 20b are flowcharts illustrating an image encoding/decoding method according to another embodiment of the present disclosure.

FIG. 21 is a flowchart illustrating an image encoding/decoding method according to another embodiment of the present disclosure.

FIG. 22 is a flowchart illustrating an image encoding/decoding method according to another embodiment of the present disclosure.

FIG. 23 is a flowchart illustrating an image encoding/decoding method according to another embodiment of the present disclosure.

FIG. 24 is a flowchart illustrating an image encoding/decoding method according to another embodiment of the present disclosure.

FIG. 25 is a flowchart illustrating an image encoding/decoding method according to another embodiment of the present disclosure.

FIG. 26 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

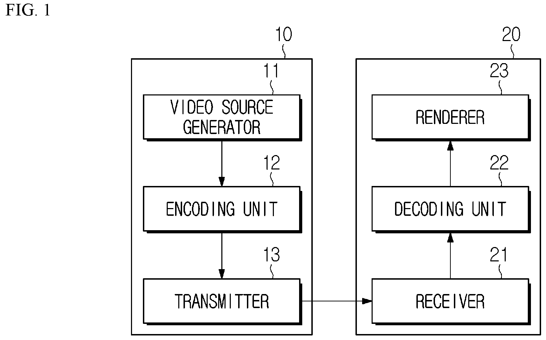

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

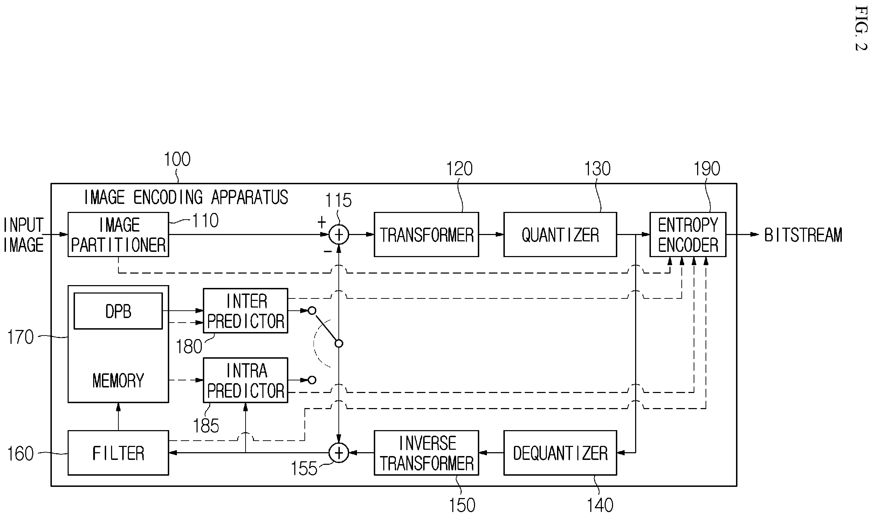

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

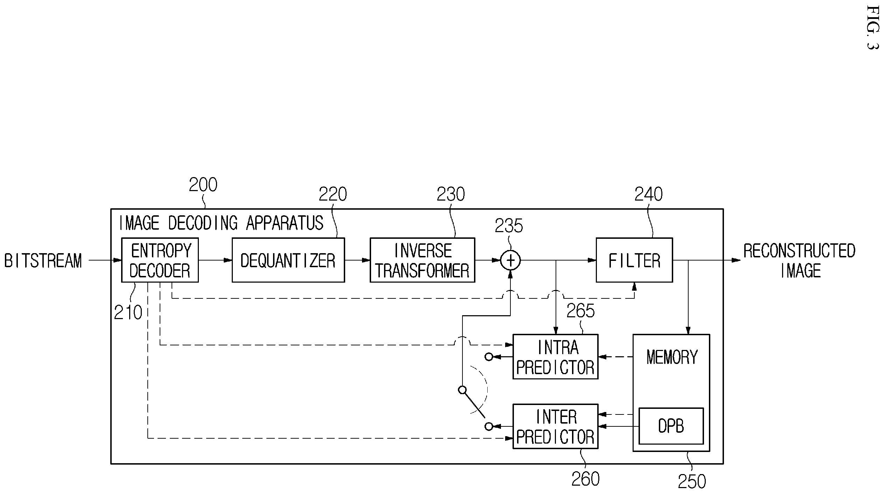

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

### Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference. The MVP mode may be called an advanced motion vector prediction (AMVP) mode.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

### Template matching (TM)

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to the current block (e.g., current coding unit, current CU). The current template may be a top neighboring block and/or a left neighboring block of the current block, or may be some of these neighboring blocks. Additionally, the reference template may be determined to have the same size as the current template.

When an initial motion vector of the current block is derived, a search for a better motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor (MVP) candidate may be determined based on template matching error. For example, a motion vector predictor (MVP) candidate that minimizes error between a current template and a reference template may be selected. After that, template matching for improving a motion vector may be performed on the selected motion vector predictor candidate. At this time, template matching for improving a motion vector may not be performed on motion vector predictor candidates that are not selected.

More specifically, the improvement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, the search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, that is, the number of samples in the block. Table 1 shows examples of search patterns according to the AMVR mode and the merge mode with AMVR.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or may skip half-pel accuracy or lower, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector improvement process between the block-based bilateral matching and the subblock-based bilateral matching. Whether the template matching is available and/or whether the bilateral matching is available may be determined according to an availability condition check. In the above, the accuracy of the motion vector may mean the accuracy of the motion vector difference (MVD).

## Embodiment

The present disclosure relates to inter prediction, and to an amvpMerge mode in which, in the process of generating a prediction block through two or more reference pictures, an AMVP prediction candidate is derived in an arbitrary prediction direction to derive prediction motion information, and a MERGE prediction candidate is configured in an opposite prediction direction to derive prediction motion information, thereby generating a final predicted block for a current block.

In the case of an arbitrary prediction direction in which motion information is derived as an AMVP prediction candidate in the process of deriving motion information, the motion information may be derived without explicitly signaling MVD if a specific condition is satisfied, and if the specific condition is not satisfied, the motion information may be derived by explicitly signaling MVD in order to refine the motion information in the AMVP prediction direction. The present disclosure proposes a method for the case where a reference picture list of a slice to be encoded/decoded consists only of POCs having a smaller value than the POC of a picture (current picture) including a current slice, or where a reference picture list of a slice consists only of POCs having a larger value than the POC of a current picture including a current slice.

The embodiments described below may be performed alone or in combination of two or more. In addition, the embodiments described below may be performed in the image encoding apparatus 100 and the image decoding apparatus 200.

## Embodiment 1-1

Embodiment 1-1 proposes a method of determining whether to perform amvpMerge mode at the SPS, PPS, Picture header or Slice header level.

A flag for determining whether to perform may be signaled through a bitstream, and when the value of the flag is 1, motion information may be derived through the amvpMerge mode at levels (pictures, slices, coding units, prediction units, etc.) that refer to the level at which the flag is signaled. The flag may be signaled through at least one level among the SPS, PPS, Picture header or Slice header. The flag may be defined as sps_amvpMerge_enabled_flag, pps_amvpMerge_enabled_flag, ph_amvpMerge_enabled_flag, or sh_amvpMerge_enabled_flag.

## Embodiment 1-2

Embodiment 1-2 proposes a method of constructing a reference picture list for an amvpMerge mode.

If a reference picture list of a slice to be encoded/decoded satisfies the proposed condition, an amvpMerge prediction candidate for a coding unit or prediction unit in the slice is constructed, and motion information may be derived.

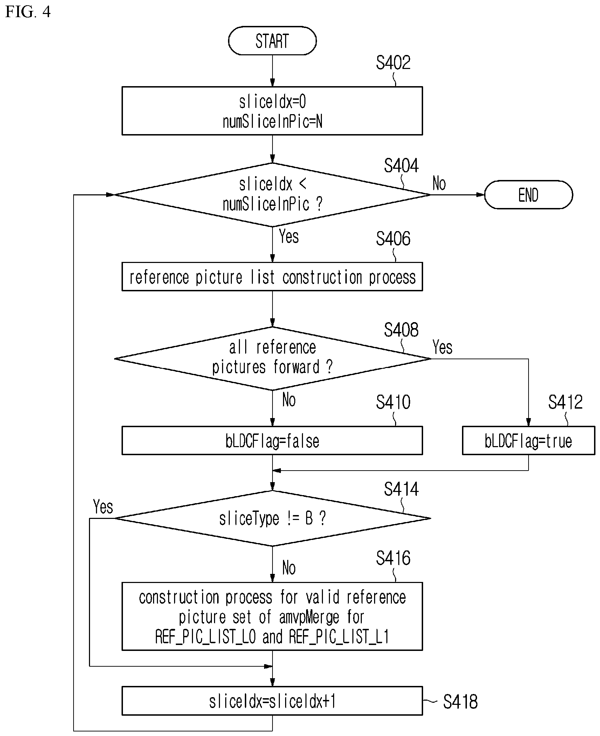

The method of Embodiment 1-2 may be performed on a slice-by-slice basis as illustrated in FIG. 4. That is, when one picture is composed of multiple slices, whether to perform the amvpMerge mode on a slice-by-slice basis may be determined.

Referring to FIG. 4, sliceIdx indicating one of a plurality of slices may be set to 0, and numSliceInPic indicating the number of slices in a picture may be set to N (S402). If a reference picture list construction process is not performed for some of the slices (S404), a reference picture list construction process may be performed for the corresponding slice (sliceIdx) (S406).

It may be checked whether all of the reference pictures in the reference picture list of the corresponding slice have a POC (picture order count) that is forward of the current picture (S408). A slice in which all of the reference pictures in the reference picture list are forward of the current picture may correspond to a low delay slice. If all of the reference pictures in the reference picture list of the corresponding slice have a POC that is forward of the current picture, bLDCFlag indicating whether the slice is a low delay slice is set to true (S412), and if even some of the reference pictures in the reference picture list of the corresponding slice have a POC that is backward of the current picture, bLDCFlag may be set to false (S410).

It may be determined whether the type of the corresponding slice is B (bi-predictive) type (S414), and if the type of the corresponding slice is B type, a process of constructing a valid reference picture set in the amvpMerge mode for a reference picture list (REF_PIC_LIST_0) in the L0 direction and a reference picture list (REF_PIC_LIST_1) in the L1 direction may be performed (S416). If the type of the corresponding slice is not B type, the process S416 may not be performed.

The process may proceed to the next slice (sliceIdx = sliceIdx + 1) after the corresponding slice, and the processes S404 to S416 may be performed. When these processes are performed repeatedly to complete the process of constructing the reference picture list for all slices (sliceIdx = numSliceInPic), the process of constructing the reference picture list may be terminated.

According to FIG. 4, in a case where a slice type allows two or more pieces of motion prediction information (B slice), a process of considering the present or absence of a reference picture on which the proposed amvpMerge mode may be performed (that may be used for amvpMerge) and a process of determining whether to enable the amvpMerge mode by considering a reference picture on which the merge mode may be performed (that may be used in the merge mode) may be performed.

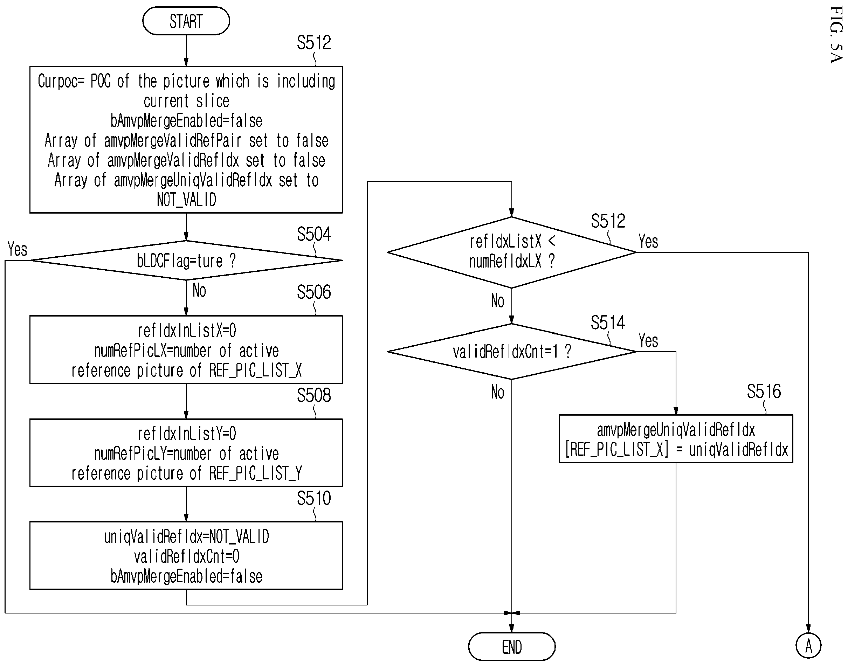

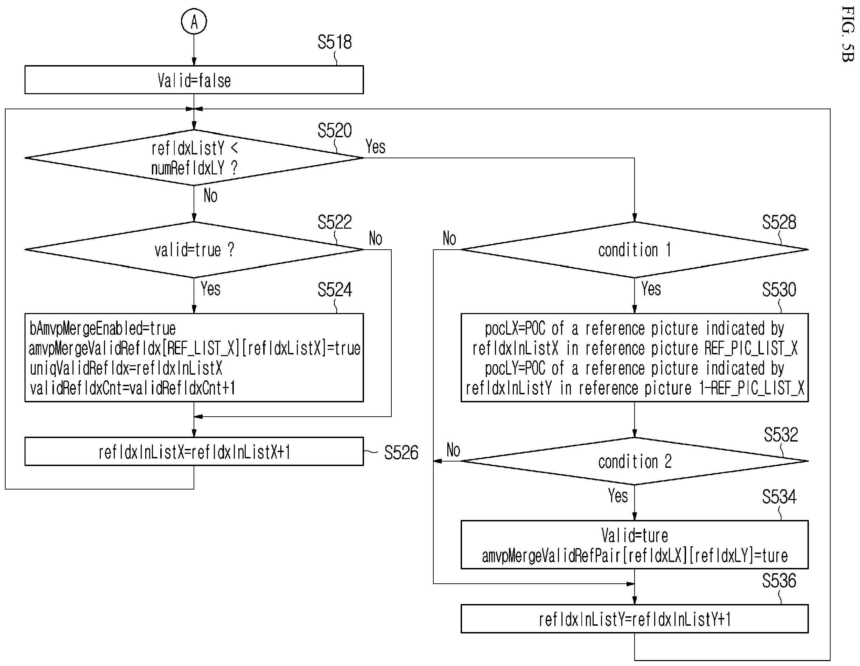

The process of considering the presence or absence of a reference picture that may be used for amvpMerge may be performed in units of the direction (L0, L1) of each reference picture, as shown in FIGS. 5a and 5b.

Referring to FIGS. 5a and 5b, initial values of variables may be set (S502). Curpoc represents a POC of a current picture included in a current slice, bAmvpMergeEnabledFlag represents whether the amvpMerge mode is enabled in the corresponding slice, amvpMergeVaildRefPair and amvpMergeVaildRefIdx represent whether a pair of a reference picture in a reference picture list in a certain prediction direction and a reference picture in a reference picture list in the other prediction direction are available in the amvpMerge mode and the indices of the corresponding pictures, and amvpMergeUniqValidRefIdx represents which reference picture in REF_PIC_LIST_X is the only reference picture that may be used in the amvpMerge mode.

Whether a reference picture set in the amvpMerge mode may be constructed may be performed for any reference picture (refIdxInListX) in a reference picture list X (X is 0 or 1) and all reference pictures (refIdxInListY) in a reference picture list Y (Y is 1-X) (S520, S528 to S536). When the determination on all reference pictures (refIdxInListY) is completed (S520), the process proceeds to the next reference picture (S526) to perform S520, S528 to S536, thereby performing the determination on all reference pictures in the reference picture list X and the reference picture list Y.

If all reference pictures in the reference picture list of the current slice are forward, that is, if the POCs of all reference pictures are smaller than the POC of the current picture, bLDCFlag is set to true, and if the value of bLDCFlag is false (S504), it is determined whether a reference picture set for the amvpMerge mode for the reference picture list L0 and the reference picture list L1 may be constructed (S506 to S536), and if it may be constructed, a reference picture set for the amvpMerge mode may be constructed.

REF_PIC_LIST_X may be expressed as REF_PIC_LIST_0 and REF_PIC_LIST_1, where REF_PIC_LIST_0 represents a reference picture list in the L0 direction and REF_PIC_LIST_1 represents a reference picture list in the L1 direction.

Also, (1-REF_PIC_LIST_X) represents the reference picture list in the opposite direction of REF_PIC_LIST_X. For example, if REF_PIC_LIST_X is REF_PIC_LIST_0, (1-REF_PIC_LIST_X) may mean REF_PIC_LIST_1, and vice versa.

When amvpMergeVaildRefPair[refIdxInListX][refIdxInListY] is true, the reference pictures corresponding to refIdxInListX and refIdxInListY become a set, and this reference picture set corresponds to the reference pictures that may derive prediction information in the amvpMerge mode.

If amvpMergeUniqValidRefIdx[REF_PIC_LIST_X] is not NOT_VALID, it indicates the index of the reference picture from which the reference picture of REF_PIC_LIST_X may uniquely derive motion information in the amvpMerge mode. That is, if the value is not NOT_VALID, the reference picture index for the amvpMerge mode may be derived through the reference picture index of amvpMergeUniqValidRefIdx[REF_PIC_LIST_X] without explicitly signaling it in the coding unit or the prediction unit.

amvpMergeVaildRefIdx[REF_PIC_LIST_X][refIdxInListX] may indicate whether the reference picture corresponding to refIdxInListX of REF_PIC_LIST_X is a reference picture that may derive motion information of the amvpMerge mode. If the value of amvpMergeVaildRefIdx[REF_PIC_LIST_X][refIdxInListX] is true, the reference picture corresponding to refIdxInListX of REF_PIC_LIST_X may be a reference picture that may derive motion information of the amvpMerge mode.

Condition 1 (S528) is a condition on the status of a reference picture, which may include whether the reference pictures corresponding to refIdxInLisX and refIdxInListY have been encoded/decoded by reference picture resampling (RPR), and/or whether they are long-term reference pictures, and/or whether weights for weighted prediction are present.

That is, as an example, Condition 1 may be specified as a case where all or one or more of the following six conditions are satisfied.

1. The reference picture corresponding to refIdxInListX is not RPR
2. The reference picture corresponding to refIdxInListY is not RPR
3. The reference picture corresponding to refIdxInListX is not a long-term reference picture
4. The reference picture corresponding to refIdxInListY is not a long-term reference picture
5. The weight of the weighted prediction for the reference picture corresponding to refIdxInListX is not signaled
6. The weight of the weighted prediction for the reference picture corresponding to refIdxInListY is not signaled

Assuming that all Condition 1s are satisfied, it is determined whether the reference pictures corresponding to refIdxLX and refIdxLY may be used as a reference picture set for the amvpMerge mode (S532). If S532 is not satisfied, a determination is made on the next reference picture (S536).

Condition 2 (S532) represents a condition for determining whether it is suitable as a reference picture for amvpMerge mode by considering the POCs of the reference pictures corresponding to refIdxLX and refIdxLY.

If the POC of the reference picture corresponding to refIdxLX is defined as pocLX, the POC of the reference picture corresponding to refIdxLY is defined as pocLY, and the POC of the current picture is defined as curPOC (S530), when one reference picture has a POC smaller than that of the current picture and one reference picture has a POC larger than that of the current picture, Condition 2 may be satisfied.

That is, Condition 2 may be expressed as in Equation 1.
[Equation 1]

$$\text{Condition2} : (pocLX - curPOC) \times (pocLY - curPOC) < 0$$

**Embodiment 1-3**

Embodiment 1-3 proposes a method of determining whether to apply an amvpMerge mode in a coding unit or a prediction unit and information explicitly signaled in the bitstream for this.

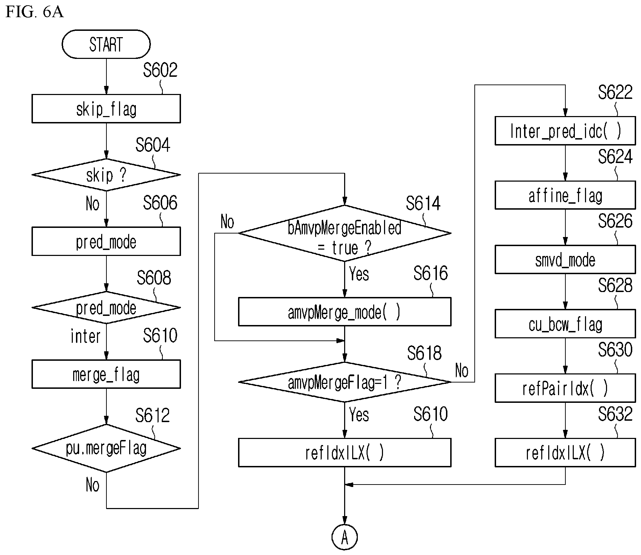

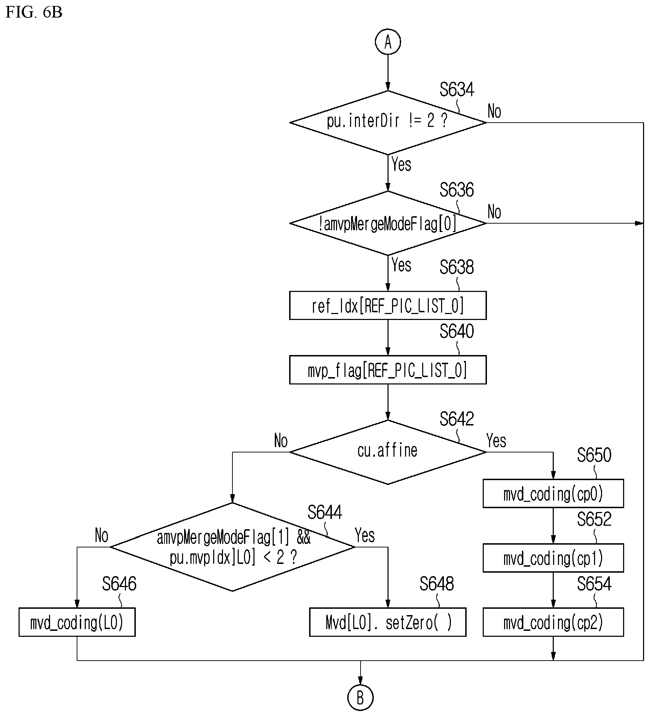

Referring to FIGS. 6a to 6c, skip_flag indicating whether skip mode is applied is signaled (S602), and if a skip mode is not applied (S604), pred_mode indicating a prediction mode is signaled (S606). If pred_mode indicates an inter prediction mode (S608), merge_flag indicating whether a merge mode is applied is signaled (S610), and if the merge mode is not applied (S612), it is determined whether the amvpMerge mode is enabled (S614).

The amvpMerge mode is not applied (S618), information indicating a prediction direction (S622), information indicating whether an affine prediction mode is applied (S624), information indicating whether a smvd (symmetric MVD) mode is applied (S626), information about a bidirectional weight index (S628), information indicating a pair of reference pictures (S630), and information indicating a reference picture in a reference picture list (S632) may be signaled.

When the amvpMerge mode is applied (S618), it is determined whether the prediction direction is the L1 prediction direction (S634), the mode to be applied to each direction among the AMVP mode and the merge mode is determined (S636), and the reference picture index and the motion information predictor for the prediction direction determined as the AMVP mode are signaled (S638, S640).

If the affine mode is not applied (S642), it is determined whether the merge mode is applied in an arbitrary direction and whether the value of the motion information predictor index in the opposite direction is less than 2 (S644). If true, the MVD is set to zero (S648), and if false, the MVD in the opposite direction is signaled (S646). If the affine mode is applied (S642), the MVDs for the control points (cp0, cp1, cp2) are signaled (S650 to S654).

It is determined whether the prediction direction is the L0 prediction direction (S656), it is determined whether the smvd mode is applied (S658), the mode to be applied to each direction among the AMVP mode and the merge mode is determined (S660), and the reference picture index and the motion information predictor for the prediction direction determined as the AMVP mode are signaled (S662, S664).

If the affine mode is not applied (S66), it is determined whether the merge mode is applied in an arbitrary direction and whether the value of the motion information predictor index in the opposite direction is less than 2 (S668). If true, the MVD is set to zero (S672), and if false, the MVD in the opposite direction is signaled (S670). If the affine mode is applied (S666), the MVDs for the control points (cp0, cp1, cp2) are signaled (S674 to S678).

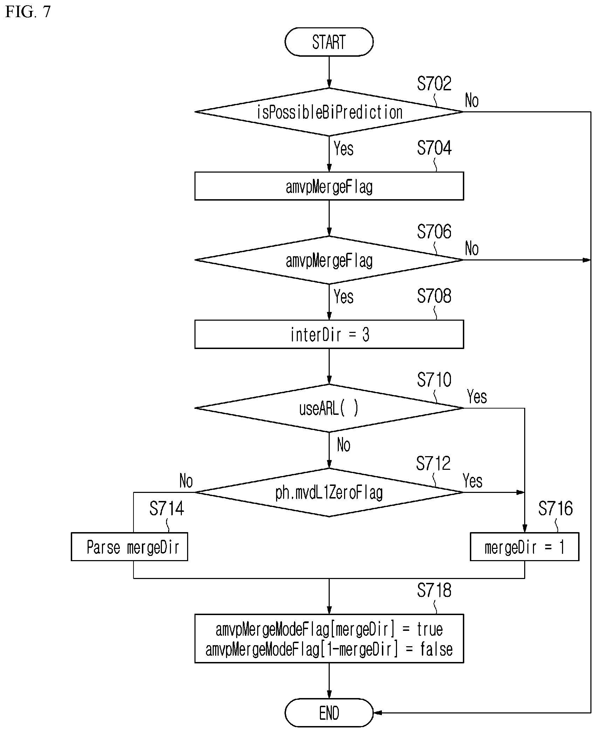

If bAmvpMergeEnabled derived at the slice level is true (1), information required for amvpMerge mode may be signaled through the process of amvpMerge_mode() in FIG. 7.

Referring to FIG. 7, it is determined whether bidirectional prediction is possible (S702), and if possible, amvpMergeFlag is signaled (S704), and whether amvpMerge mode is applied may be determined based on amvpMergeFlag (S706). If the prediction direction is bidirectional (S708), in order to distinguish between an arbitrary prediction direction in which motion information is derived as an AMVP prediction candidate and an arbitrary prediction direction in which motion information is derived as a merge prediction candidate, whether an adaptive reference list (ARL) defined at the SPS/PPS/PH/SH level is enabled (S710) and mvdL1ZeroFlag derived from PH may be determined (S710, S712).

With reference to the conditions, if useARL() is disabled and mvdL1ZeroFlag is 0, a 1-bit flag (mergeDir) is signaled (S714, S718) so that an arbitrary prediction direction in which motion prediction information is derived as a merge prediction candidate may be determined. Conversely, if useARL() is enabled or mvdL1ZeroFlag is 1, motion information may be derived from a merge prediction candidate in the L1 prediction direction without separate signaling (S716, S718).

The amvpMergeModeFlag[] array specifies how to derive motion information in an arbitrary prediction direction. When amvpMergeModeFlag[0] is true, L0 means that motion information is derived from the merge prediction candidate and L1 means that motion information is derived from the AMVP prediction candidate. Conversely, when amvpMergeModeFlag[1] is true, L1 means that motion information is derived from the merge prediction candidate and L0 means that motion information is derived from the AMVP prediction candidate.

**Embodiment 1-4**

Embodiment 1-4 proposes a process for determining a reference picture list to derive motion information using an amvpMerge mode in a coding unit or a prediction unit, and syntax information therefor.

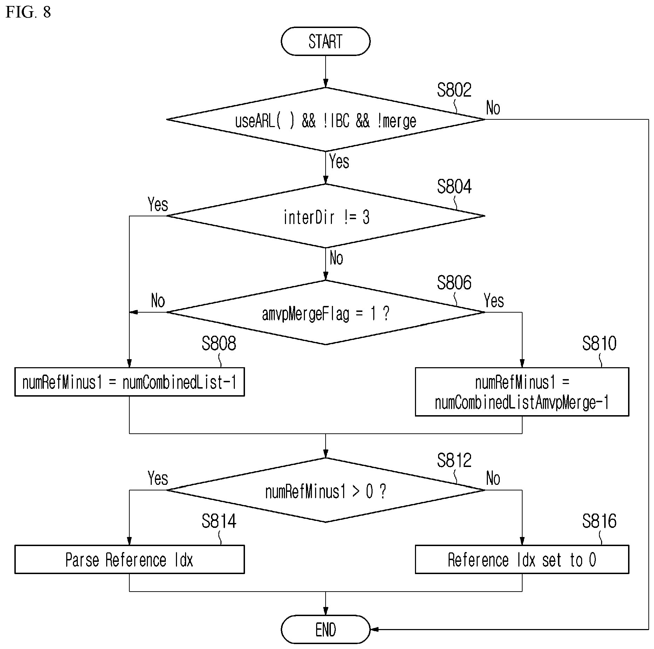

The proposed method selectively determines one of two reference picture index signaling methods in order to transmit a reference picture index for the amvpMerge mode. The two proposed methods may be shown in FIGS. 8, 9a and 9b, and 10, and each reference picture index method follows the flowcharts of FIGS. 6a to 6c.

The first method follows the processes illustrated in FIG. 8, where numCombinedListAmvpMerge in FIG. 8 represents the number of reference picture sets for which prediction may be performed via the amvpMerge mode.

Additionally, useARL() represents whether to enable the adaptive reference list construction method signaled or implicitly derived at SPS/PPS/PH/SH.

Referring to FIG. 8, if useARL() is true and the IBC mode is not applied and the merge mode is not applied (S802), it is determined whether the prediction direction is bidirectional (S804). If the prediction direction is not bidirectional (S804) or the amvpMerge mode is not applied (S806), the value obtained by subtracting 1 from the number of reference pictures is set equal to the value obtained by subtracting 1 from the number of combined reference pictures (S808), and if the prediction direction is bidirectional (S804) and the amvpMerge mode is applied (S806), the value obtained by subtracting 1 from the number of reference pictures is set equal to the value obtained by subtracting 1 from the number of combined amvpMerge reference picture sets (S810).

If the set value is greater than 0 (S812), the reference picture index is signaled (S814), but if the set value is 0, i.e., if the combined amvpMerge reference picture set is unique (numRefMinus1 is 0), the reference picture index is implicitly derived (S816) without separate signaling.

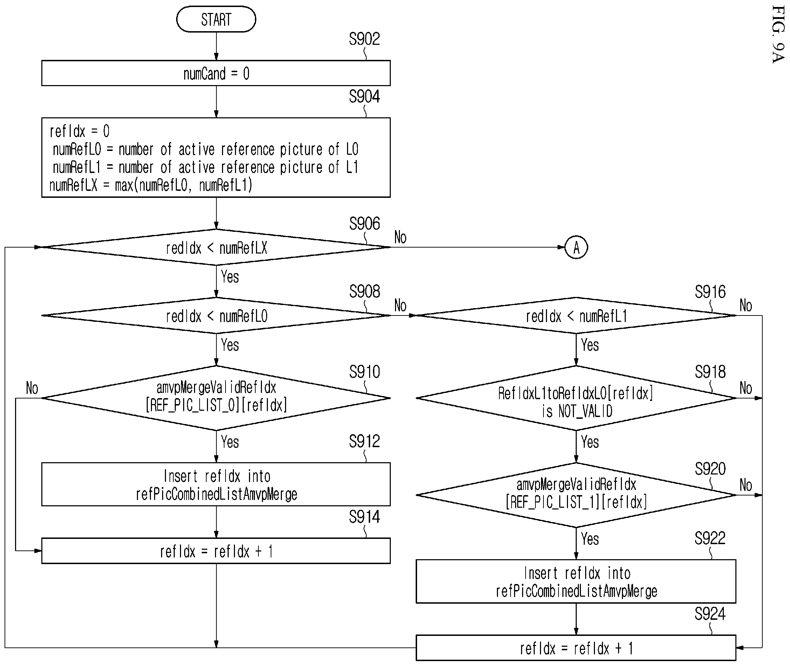

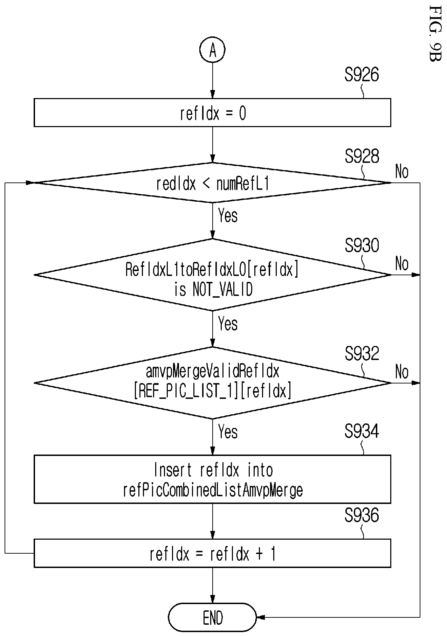

numCombineListAmvpMerge represents the number of reference picture sets (combinedListAmvpMerge) for amvpMerge derived at the slice level, and the reference picture sets (combinedListAmvpMerge) may be derived through the processes shown in FIGS. 9a and 9b.

Referring to FIGS. 9a and 9b, a reference picture set (refIdxcombinedListAmvpMerge) value is initialized (S902), a reference picture index (refIdx), the number of reference pictures in the reference picture list L0 is set to the value of numRefL0, the number of reference pictures in the reference picture list L1 is set to the value of numRefL1, and a larger value between numRefL0 and numRefL1 is set to the value of numRefLX (S904).

If the value of refIdx is less than the value of numRefLX (S906) and the value of refIdx is less than the value of numRefL0 (S908), a reference picture set in the L0 direction is derived (S910 to S914). Specifically, it is determined whether a reference picture corresponding to refIdx is available for the amvpMerge mode (S910), and if available, the reference picture is added to the reference picture set (S912). The same processes are repeated for the next reference picture (S914). Even if the process S910 is false, the same processes are repeated for the next reference picture.

If the value of refIdx is less than the value of numRefLX (S906), but the value of refIdx is not less than the value of numRefL0 (S908), and if the value of refIdx is less than the value of numRefL1 (S916), a reference picture set in the L1 direction is derived (S918 to S924). Specifically, it is determined whether refIdx is invalid for each prediction direction (S918), and if it is invalid, it is determined whether the reference picture corresponding to refIdx is available for the amvpMerge mode (S920), and if available, the corresponding reference picture is added to the reference picture set (S922), and the same processes are repeatedly performed for the next reference picture (S924). Even if processes S916, S918, and S920 are false, the same processes are repeatedly performed for the next reference picture (S924).

If the value of refIdx is not less than the value of numRefLX (S906), the process returns to the first reference picture (S926), and if the value of refIdx is less than the value of numRefL1, it is determined whether refIdx is not valid for each prediction direction (S930), and if it is not valid, it is determined whether the reference picture corresponding to refIdx is available for the amvpMerge mode (S932), and if available, the corresponding reference picture is added to the reference picture set (S934), and the same processes are repeatedly performed for the next reference picture (S936). Even if the processes S930 and S932 are false, the same processes are repeatedly performed for the next reference picture (S936).

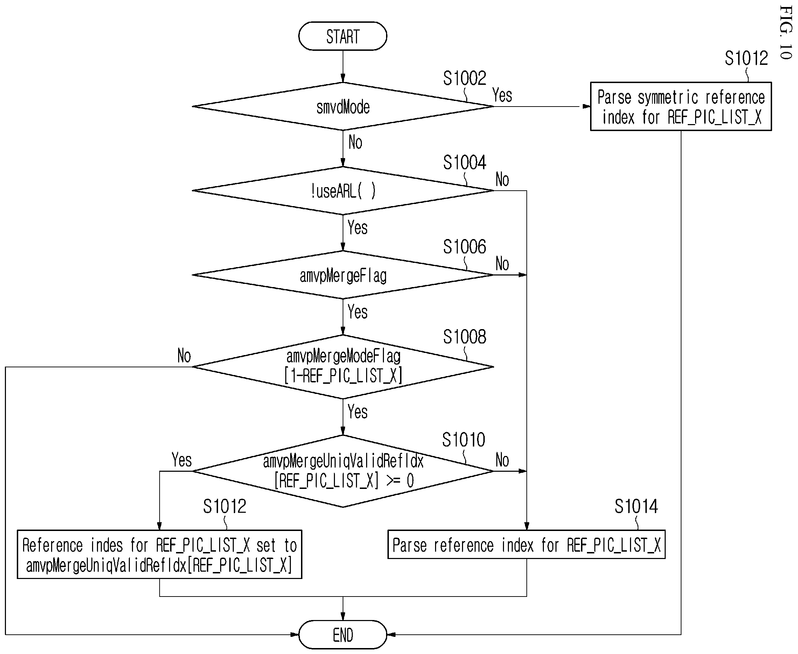

The second proposed method performs the respective processes shown in FIG. 10. It is determined whether the smvd mode is applied (S1002), and if applied, a reference index for the smvd mode is signaled (S1016), and if not applied, it is determined whether useARL( ) is applied (S1004). If useARL( ) is not applied, it is determined whether amvpMerge is applied (S1006), and if amvpMerge is applied, the prediction direction to which the merge mode and the AMVP mode are applied is determined (S1008). If the mode applied to the 1-REF_PIC_LIST_X direction is the merge mode, it is determined whether the reference picture set is unique (S1010), and if unique, a reference picture index is implicitly derived (S1012), and if not unique, a reference picture index is signaled (S1014).

As illustrated in FIG. 10, when the value of amvpMergeModeFlag[1-REF_PIC_LIST_X] is 1, that is, when amvpMergeFlag is 1 in the coding unit and the value of amvpMergeModeFlag[REF_PIC_LIST_X] is derived to be false so that the prediction direction of REF _PIC_LIST_X derives motion information from the AMVP prediction candidate, the reference picture index is signaled. The method of FIG. 10 may be performed when the reference picture index is not signaled through the method of FIG. 8, and when the reference picture set derived from the slice level is unique (when amvpMergeUniqValidRefIdx[REF_PIC_LIST_X] is not NOT_VALID), the reference picture index is implicitly derived without separate signaling.

## Embodiment 1-5

Embodiment 1-5 proposes a method of constructing prediction candidates in a process of deriving motion information in a coding unit or a prediction unit through an amvpMerge mode.

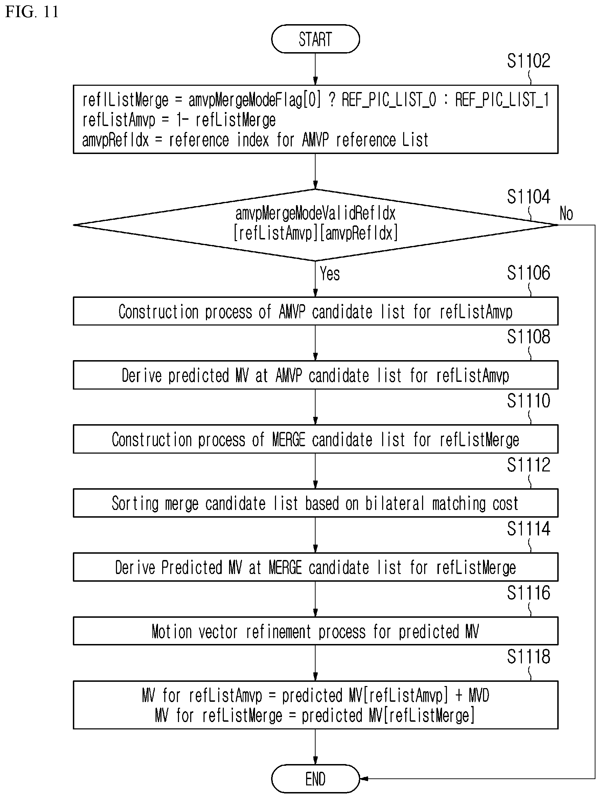

As expressed in FIG. 11, depending on the value of amvpMergModeFlag, an arbitrary prediction direction in which motion information is derived from an AMVP prediction candidate and an arbitrary prediction direction in which motion information is derived from a merge prediction candidate may be defined as refListAmvp and refListMerge, respectively, and an implicitly or explicitly derived AMVP reference index may be defined as amvpRefIdx (S1102).

Only when the reference picture indicated by amvpRefIdx is a reference picture defined so as to be able to generate a prediction block through amvpMerge prediction (S1104), the AMVP candidate list construction process (S1106), the process of deriving a prediction motion vector based on the AMVP candidate list (S1108), the merge candidate list construction process (S1110), the process of sorting the merge candidate list based on the bi-lateral matching error (cost) (S1112), the process of deriving a predicted motion vector based on the merge candidate list (S1114), the process of refining the predicted motion vector (S1116), and the process of deriving an MVD from the refined motion vector (S1118) are performed.

In Embodiment 1-5, methods for constructing an AMVP candidate list and a merge candidate list are proposed.

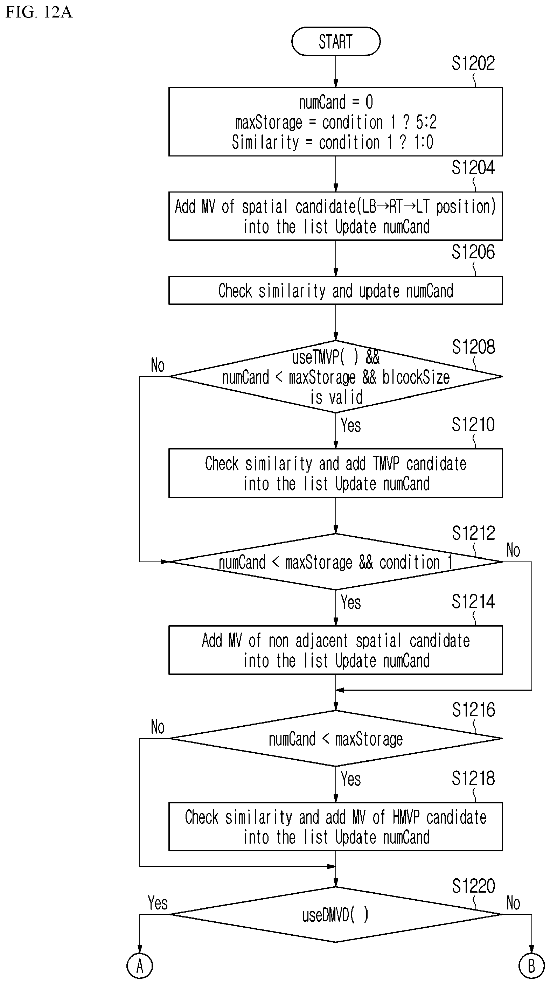

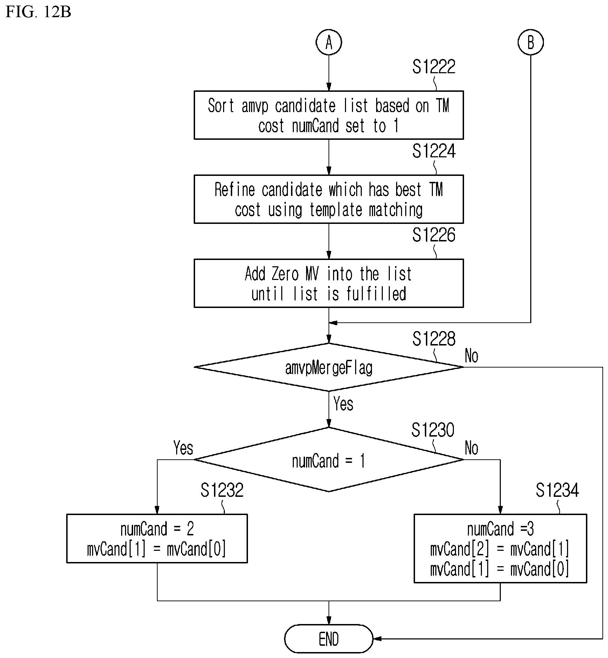

The AMVP candidate list construction process is illustrated in FIGS. 12a and 12b. Referring to FIGS. 12a and 12b, the values of variables numCand, maxStorage, and Similarity are set (S1202), and the motion information of spatial candidates (LB, RT, LT) is sequentially added to the list, and the value of numCand is updated (S1204).

The identity of the motion information in the AMVP candidate list is determined, the value of numCand is updated (S1206), and it is determined whether the TMVP mode is applied, whether the number of motion information in the AMVP candidate list is less than maxStorage, and whether the size of the current block is valid (S1208). If all three conditions are satisfied, the TMVP candidate may be included in the AMVP candidate list based on the identity determination (S1210), and if any one of the three conditions is not satisfied, it is determined whether the number of motion information in the AMVP candidate list is less than maxStorage and whether Condition 1 is satisfied (S1212). If two conditions are both satisfied, the motion information of the non-adjacent candidate is added to the AMVP candidate list (S1214), and if any one of the two conditions is not satisfied, it is determined whether the number of motion information in the AMVP candidate list is less than maxStorage (S1216). If one condition is satisfied, an HMVP candidate may be included in the AMVP candidate list based on identity determination (S1218).

After this, it is determined whether DMVD (decoder side motion vector derivation) is applied (S1220). If DMVD is applied, a process of sorting the AMVP candidate list based on the TM cost (S1222) and a process of refining the candidate with the highest TM cost (S1224) are performed, and then a process of adding zero MV (S1226) is performed. Here, the highest TM cost may correspond to the TM cost with the minimum value. If DMVD is not applied, the process S1226 is performed immediately.

After this, it is determined whether the amvpMerge mode is applied (S1228), and if applied, if the number of AMVP candidates is 1 (S1230), a second AMVP candidate is generated with the value of the first AMVP candidate, thereby increasing the number of AMVP candidates to 2 (S1232), and if the number of candidates is not 1 (S1230), a second AMVP candidate is generated with the value of the first AMVP candidate, and a third AMVP candidate is generated with the value of the second AMVP candidate, thereby increasing the number of AMVP candidates to 3 (S1234).

In the process S1212, Condition 1 indicates whether at least one of the two conditions below is satisfied.

1. Whether the current block is an inter prediction method (multi hypothesis inter prediction) that generates a final prediction block by weighted average of three or more prediction blocks.
2. Whether template matching is enabled in the current block

Through the method of FIG. 12, in the process of deriving amvpMerge motion information, one or two pieces of motion information of the AMVP reference picture list may be derived and expanded to two or three.

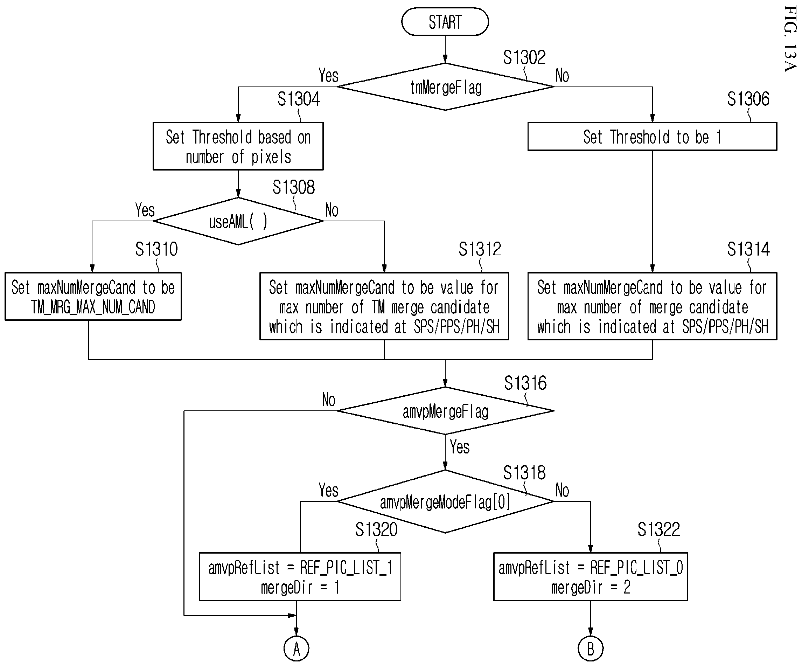

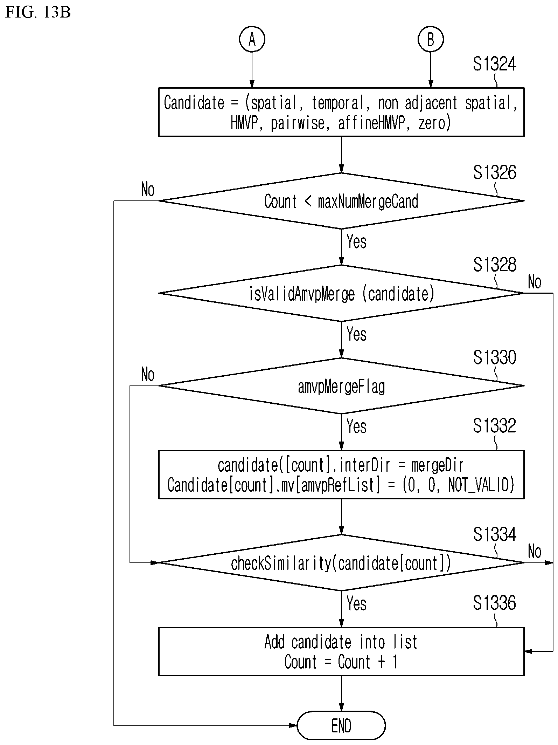

The AMVP candidate list construction process is shown in FIGS. 13a and 13b.

Referring to FIGS. 13a and 13b, it is determined whether a merge mode based on template matching (TM merge mode) is applied (S1302), and if applied, a threshold is set based on the number of pixels (S1304), and if not applied, the threshold is set to a predetermined value (1) (S1306). After the process S1304, depending on whether the AML mode is applied (S1308), if applied, the maximum number of merge candidates is set to the maximum number of TM merge candidates for the TM merge mode (S1310), and if not applied, the maximum number of merge candidates is set to the maximum number of TM merge candidates signaled via SPS/PPS/PH/SH (S1312). After the process S1306, the maximum number of merge candidates is set to the maximum number of merge candidates signaled via SPS/PPS/PH/SH (S1314).

When the amvpMerge mode is applied (S1316), the values of amvpRefList and mergeDir are derived (S1320, S1322) depending on the applied mode (either the AMVP mode or the merge candidate) (S1318).

In addition, if the spatial, temporal, non-adjacent spatial, HMVP, pairwise, affine, HMVP and zero MV that may be candidates (S1324) satisfy the isValidAmvpMerge() condition (S1328), the threshold is referenced to check the similarity between the candidate and the candidate previously added to the list, and if not similar (S1334), the candidate is added to the candidate list (S1336). In this process, if the current block is in amvpMerge mode (S1330), before performing the similarity check, the interDir of the candidate and the motion information of the AMVP candidate list are reset (S1332) in order to perform the similarity check using only the motion information of the merge reference list among the motion information of the candidate.

isValidAmvpMerge() is always true if the current block is not in amvpMerge mode, that is, if amvpMergeFlag is 0. If the current block is in amvpMerge mode, it is true only if the reference picture indicated by the reference index in the candidate's merge reference picture list is a reference picture available in amvpMerge mode, and otherwise, it is false.

That is, isValidAmvpMerge() is true if the reference picture indicated by the reference index of the AMVP reference picture list and the reference picture indicated by the reference index of the merge candidate list of the merge candidate satisfy the value of amvpMergeVaildRefPair derived at the slice level as true. Conversely, if the value of amvpMergeVaildRefPair is false, isValidAmvpMerge() of the candidate becomes false.

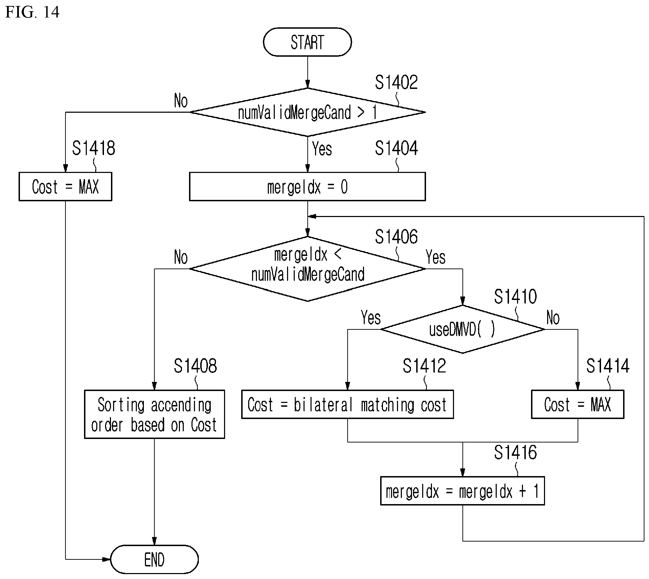

The merge candidate list derived through the processes of FIG. 13 is sorted in ascending order based on the bi-lateral matching cost by the processes shown in FIG. 14. numValidMergeCand represents the number of candidates in the derived merge candidate list. That is, if DMVD is enabled in the current block (S1410), the bi-lateral matching cost is calculated for all constructed merge candidates (S1412), and the merge candidates are sorted in ascending order with reference to this value, and a candidate with the smallest error (cost) among the ordered merge candidates is given priority. In addition, if the number of derived merge candidates is not 2 or more (S1402) or DMVD is disabled in the current block (S1410), the cost of the merge candidate is made to have the MAX value without calculating the bi-lateral cost (S1414, S1418), so that the effect of sorting is not caused, and the order of the derived merge candidates is maintained.

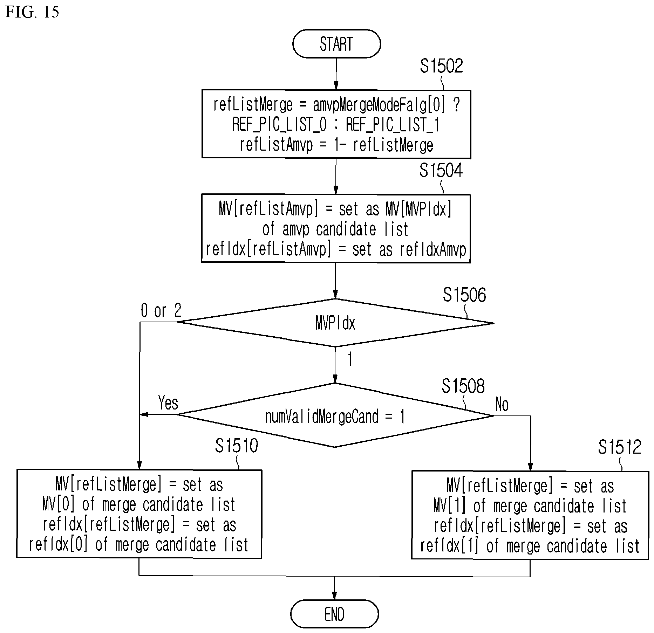

The AMVP candidate list and merge candidate list derived through the processes described above may be used to construct a bidirectional predicted MV for the amvpMerge mode, and the processes for constructing the predicted MV are shown in FIG. 15.

In FIG. 15, MVPIdx represents an AMVP candidate index derived explicitly or implicitly. numValidMergeCand represents the number of merge candidates, and the curMv[] array and the curRefIdx[] array represent motion information of the current block and motion information and reference picture index for the reference picture list (REF_PIC_LIST_0, REF_PIC_LIST_1). For example, curMv[RefListMerge] represents motion information of the reference picture list indicated by RefListMerge, and curMv[RefListAmvp] represents motion information of the reference picture list indicated by RefListAmvp. RefListMerge and RefListAmvp may be REF_PIC_LIST_0 or REF_PIC_LIST_1.

The MV[] array and the refIdx[] array represent the motion information of the candidate index of the AMVP candidate list or the merge candidate list, and the candidate index means the number specified in the array[]. For example, mv[0] of the merge candidate list represents the motion information of the 0-th candidate constructed in the merge candidate list.

Referring to FIG. 15, a reference picture list for a merge mode (merge reference picture list) is determined depending on whether the prediction mode in the L0 direction is the merge mode, and a reference picture list in the opposite direction to the prediction direction to which the merge mode is applied is determined to be a reference picture list for the AMVP mode (AMVP reference picture list) (S1502).

The motion information of the AMVP reference picture list is set to the motion information of an AMVP candidate indicated by an MVP candidate index among the AMVP candidates in the AMVP candidate list, and a reference picture index in the AMVP reference picture list is set (S1504). When the value of the MVP candidate index is 0 or 2 (S1506) and when the value of the MVP candidate index is 1 (S1506) and the number of merge candidates is 1 (S1508), the motion information of the merge reference picture list is set to the motion information of the 0-th candidate among the merge candidates in the merge candidate list, and the reference picture index in the merge reference picture list is set to the index of the reference picture of the 0-th candidate in the merge candidate list (S1510). If the value of the MVP candidate index is 1 (S1506) and the number of merge candidates is not 1 (S1508), the motion information of the merge reference picture list is set to the motion information of the 1-th candidate among the merge candidates in the merge candidate list, and the reference picture index in the merge reference picture list is set to the index of the reference picture of the 1-th candidate in the merge candidate list (S1510).

### Embodiment 1-6

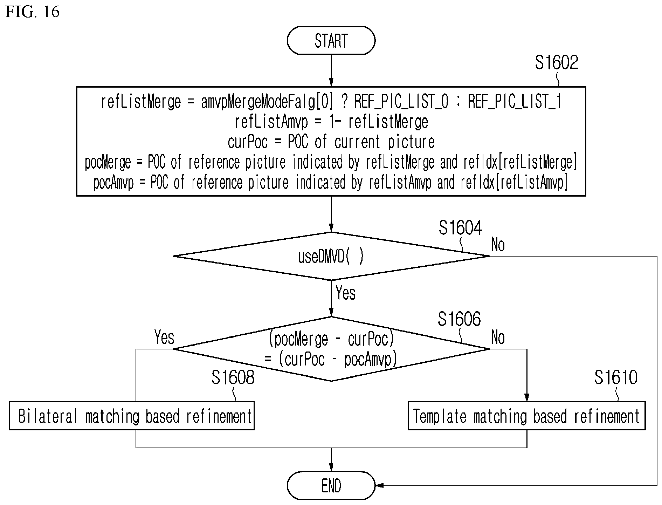

Embodiment 1-6 proposes a method of refining derived motion information (predicted MV) in the process of deriving motion information using an amvpMerge mode in a coding unit or a prediction unit. A drawing for Embodiment 1-6 is shown in FIG. 16.

Referring to FIG. 16, a merge reference picture list is determined depending on whether the prediction mode in the L0 direction is a merge mode, a reference picture list in the opposite direction to the prediction direction to which the merge mode is applied is determined to be an AMVP reference picture list, a POC of a reference picture indicated by the merge reference picture list and index is determined, and a POC of a reference picture indicated by the AMVP reference picture list and index is determined (S1602).

Motion information (predicted MV) in the amvpMerge mode is adaptively refined based on Bi-lateral matching (S1608) or Template matching (S1610) by considering a distance between a current picture and a reference picture (S1606) when DMVD is enabled (S1604).

**Embodiment 1-7**

Embodiment 1-7 relates to a method of deriving motion information by using derived prediction candidates and explicitly signaled MVD information in a process of deriving motion information by using an amvpMerge mode in a coding unit or a prediction unit.

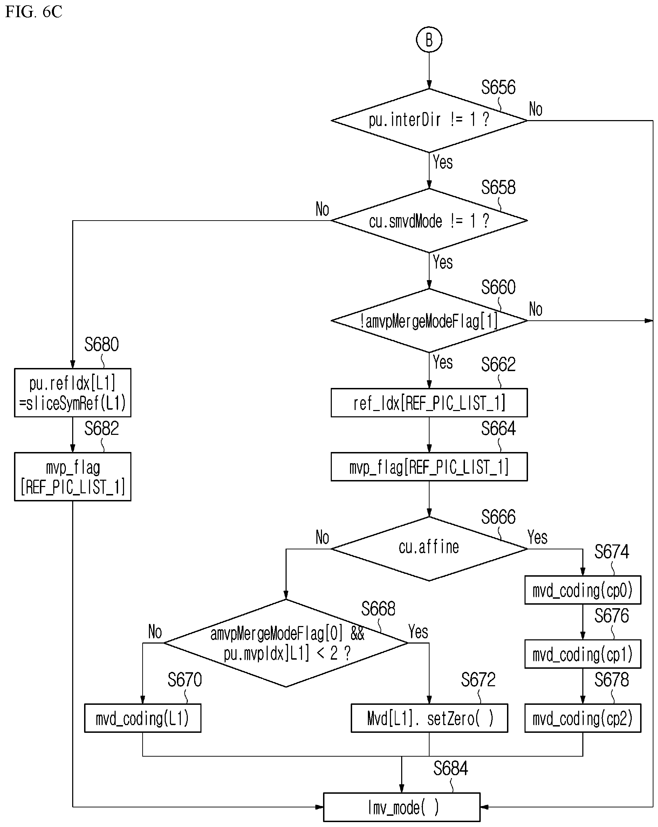

The processes for the proposed method are shown in FIGS. 6a and 6c.

Referring to FIGS. 6a to 6c, the amvpMerge mode is not applied (S618), information indicating a prediction direction (S622), information indicating whether an affine prediction mode is applied (S624), information indicating whether a symmetric MVD (smvd) mode is applied (S626), information on a bidirectional weight index (S628), information indicating a pair of reference pictures (S630), and information indicating a reference picture in a reference picture list (S632) may be signaled.

When the amvpMerge mode is applied (S618), it is determined whether the prediction direction is bidirectional (S634), the mode applied to each direction among the AMVP mode and the merge mode is determined (S636), and the reference picture index and the motion information predictor for the prediction direction determined as the AMVP mode are signaled (S638, S640).

If the affine mode is not applied (S642), it is determined whether the merge mode is applied in an arbitrary direction and whether the value of the motion information predictor index in the opposite direction is less than 2 (S644). If true, the MVD is set to zero (S648), and if false, the MVD in the opposite direction is signaled (S646). If the affine mode is applied (S642), the MVDs for the control points (cp0, cp1, cp2) are signaled (S650 to S654).

It is determined whether the prediction direction is unidirectional (S656), it is determined whether the smvd mode is applied (S658), the mode to be applied to each direction among the AMVP mode and the merge mode is determined (S660), and the reference picture index and the motion information predictor for the prediction direction determined to be the AMVP mode are signaled (S662, S664).

If the affine mode is not applied (S666), it is determined whether the merge mode is applied in an arbitrary direction and whether the value of the motion information predictor index in the opposite direction is less than 2 (S668). If true, the MVD is set to zero (S672), and if false, the MVD in the opposite direction is signaled (S670). If the affine mode is applied (S666), the MVDs for the control points (cp0, cp1, cp2) are signaled (S674 to S678).

Among the processes represented in FIGS. 6a to 6c, Embodiment 1-7 will be described again by considering only the process S618, the process S636, the process S644, the process S646, the process S648, the process S660, the process S668, the process S670, and the process S672 process, as follows.

If amvpMergeModeFlag[1] is true (1) (S644), the mvd for REF_PIC_LIST_0 is conditionally explicitly signaled (S646) or set to zero MV without separate signaling (S648). In this case, the condition means that the MVP index of REF_PIC_LIST_0 of the current block is greater than or equal to 2 (S644). In addition, if amvpMergeModeFlag[1] is True, the MVD of REF_PIC_LIST_1 is set to zero MV (S672).

If amvpMergeModeFlag[0] is true (1) (S668), the mvd for REF_PIC_LIST_1 is conditionally explicitly signaled (S670) or set to zero MV without separate signaling (S668). In this case, the condition means that the MVP index of REF_PIC_LIST_1 of the current block is greater than or equal to 2 (S668). In addition, if amvpMergeModeFlag[0] is True, the MVD of REF_PIC_LIST_0 is set to zero MV (S648).

The final MV is derived by compensating the MVD for each reference picture list derived through Embodiment 1-7 to the predicted MV.

**Embodiment 2**

Embodiment 2 is a modification of Embodiment 1-2 and proposes a method of constructing a reference picture list for an amvpMerge mode.

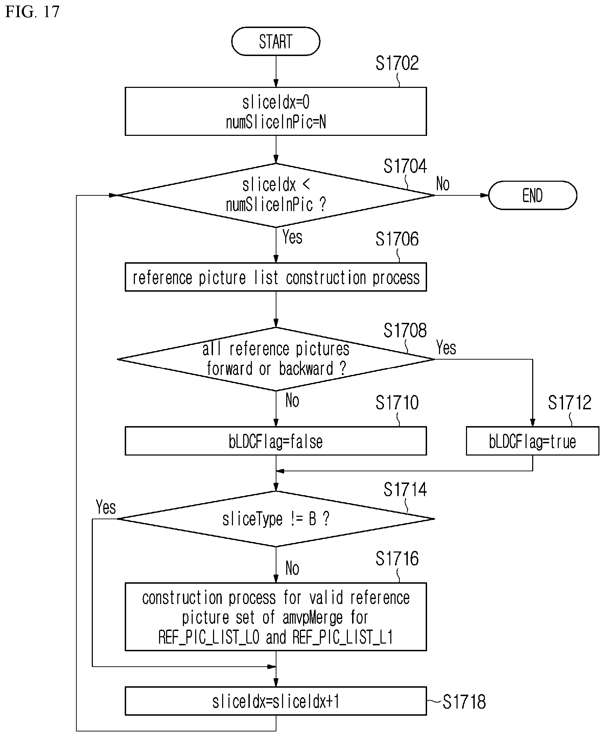

A drawing for Embodiment 2 is shown in FIG. 17. Most of the processes expressed in FIG. 17 operate identically to the processes expressed in FIG. 4 and thus, hereinafter, processes corresponding to differences from FIG. 4 will be described.

According to FIG. 4, after defining bLDCFlag for a low delay slice and constructing a reference picture list of a slice to be encoded/decoded, if all reference pictures in the reference picture list are in a forward direction, the value of bLDCFlag is set to true.

According to the process S1708 of FIG. 17, if a current block cannot construct a reference picture set satisfying true bi-prediction by considering information about reference pictures in the reference picture list of the slice, i.e., if all reference pictures are in the forward direction or the backward direction, a reference picture set available in the amvpMerge mode may be constructed.

Embodiment 2 also proposes a method of constructing a reference picture set available in an amvpMerge mode when a slice is a B slice that generates a prediction block using two or more pieces of motion information.

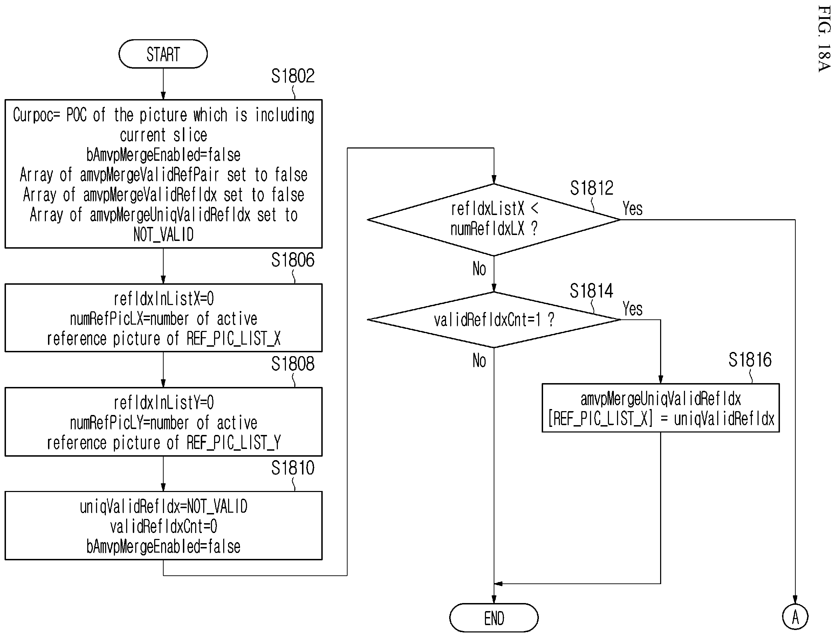

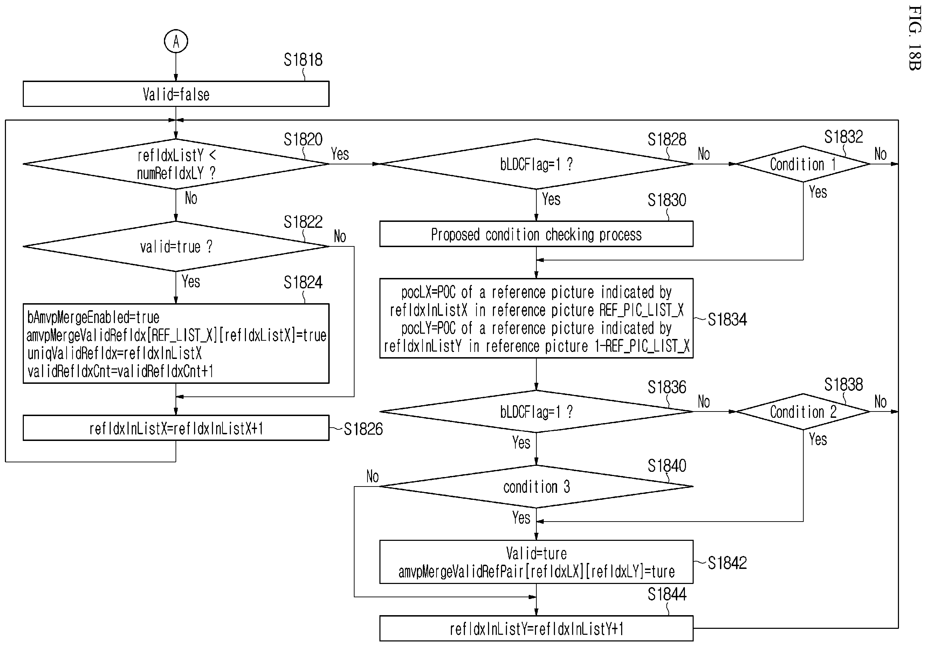

An example of a method of constructing a reference picture set when the type of the slice is a B slice is shown in FIGS. 18a and 18b. Most of the processes expressed in FIGS. 18a and 18b operate identically to the processes expressed in FIG. 5a, and thus the processes corresponding to differences from FIG. 5a will be focused upon.

Referring to FIGS. 18a and 18b, the process S504 for checking whether the value of bLDCFlag is true is initially performed in FIG. 5a, but the process is not initially performed in FIGS. 18a and 18b.

In addition, the processes S528 to S536 of FIG. 5a are changed to processes S1828 to S1844 of FIGS. 18a and 18b. Specifically, the value of bLDCFlag is determined (S1828), and if bLDCFlag = 1, a process of examining whether the proposed condition is satisfied is performed (S1830), and if bLDCFlag = 0, whether condition 1 is satisfied is checked (S1832). After that, the POC of the reference picture corresponding to refIdxLX is defined as pocLX, the POC of the reference picture corresponding to refIdxLY is defined as pocLY, and the POC of the current picture is defined as curPOC (S1834), and the value of bLDCFlag is determined again (S1836). If bLDCFlag = 1, whether Condition 3 is satisfied is checked (S1840), and if bLDCFlag = 0, whether Condition 2 is satisfied is checked (S1838). If Condition 3 is satisfied and if Condition 2 is satisfied, the value of the variable (Valid) indicating whether a reference picture set available in the amvpMerge mode may be constructed is set to true, and a pair of reference pictures indicated by refIdxLX and refIdxLY are set as a reference picture set available in the amvpMerge mode (S1842). After that, a determination on the next reference picture is performed (S1844).

Condition 1 (S1832) is a condition on the status of a reference picture, which may include whether the reference pictures corresponding to refIdxInLisX and refIdxInListY have been encoded/decoded by reference picture resampling (RPR), and/or whether they are long-term reference pictures, and/or whether a weight for weighted prediction is present.

That is, as an example, Condition 1 may be specified as a case where all or one or more of the following six conditions are satisfied.

1. The reference picture corresponding to refIdxInListX is not RPR
2. The reference picture corresponding to refIdxInListY is not RPR
3. The reference picture corresponding to refIdxInListX is not a long-term reference picture
4. The reference picture corresponding to refIdxInListY is not a long-term reference picture
5. The weight of the weighted prediction for the reference picture corresponding to refIdxInListX is not signaled
6. The weight of the weighted prediction for the reference picture corresponding to refIdxInListY is not signaled

Assuming that both Condition 1s are satisfied, it is determined whether the reference pictures corresponding to refIdxLX and refIdxLY may be used as a reference picture set for an amvpMerge mode. If not, a determination is made on the next reference picture.

Condition 2 (S1838) represents a condition for determining whether it is suitable as a reference picture for the amvpMerge mode by considering the POCs of the reference pictures corresponding to refIdxLX and refIdxLY.

If the POC of the reference picture corresponding to refIdxLX is defined as pocLX, the POC of the reference picture corresponding to refIdxLY is defined as pocLY, and the POC of the current picture is defined as curPOC, when one reference picture has a POC smaller than that of the current picture and another reference picture has a POC larger than that of the current picture, Condition 2 may be satisfied. That is, Condition 2 may be expressed as in Equation 1 above.

Condition 3 (S 1840) represents a condition for determining whether it is suitable as a reference picture for amvpMerge mode prediction by considering the POCs of the reference picture corresponding to refIdxLX and refIdxLY in case of a low delay slice. Condition 3 may be expressed as Equation 2, which means that when the POC of the reference picture corresponding to refIdxLX is defined as pocLX, the POC of the reference picture corresponding to refIdxLY is defined as pocLY, and the POC of the picture containing the slice to be encoded/decoded is defined as curPOC, the two reference pictures are not the same pictures, and it can be said that Condition 3 is satisfied when the two pictures are not the same.

[Equation 2]

$$\text{Condition 3: } pocLX \mathrel{!}= pocLY$$

Condition 3 may be expressed by Equation 3, which means that two reference pictures are reference pictures with a certain distance or more, and it can be said that Condition 3 is satisfied if the two pictures have a distance difference greater than a predefined THRESHOLD.

[Equation 3]

$$\text{Condition3}: abs(pocLX - pocLY) < \text{THRESHOLD}$$

abs() in Equation 3 means an absolute value, and THRESHOLD is a predefined value that may be derived explicitly or implicitly in the decoder/encoder.

The conditions used in the process of determining whether the proposed conditions are satisfied (S1830) may be defined as follows.

    1. Whether useDMVD() is satisfied
    2. Status information of reference picture

The status information of a reference picture may be specified as a case where one or more of the following six conditions are satisfied.

    1. The reference picture corresponding to refIdxInListX is not RPR
    2. The reference picture corresponding to refIdxInListY is not RPR
    3. The reference picture corresponding to refIdxInListX is not a long-term reference picture
    4. The reference picture corresponding to refIdxInListY is not a long-term reference picture
    5. The weight of the weighted prediction for the reference picture corresponding to refIdxInListX is not signaled
    6. The weight of the weighted prediction for the reference picture corresponding to refIdxInListY is not signaled

Satisfaction of the proposed condition may be defined as the case where the status information of the reference picture is completely satisfied when useDMVD() is satisfied, or the case where the status information of the reference picture is partially satisfied when useDMVD() is satisfied.

**Embodiment 3**

Embodiment 3 is a modification of Embodiments 1-2 and 2, and proposes a method of constructing a reference picture list for an amvpMerge mode.

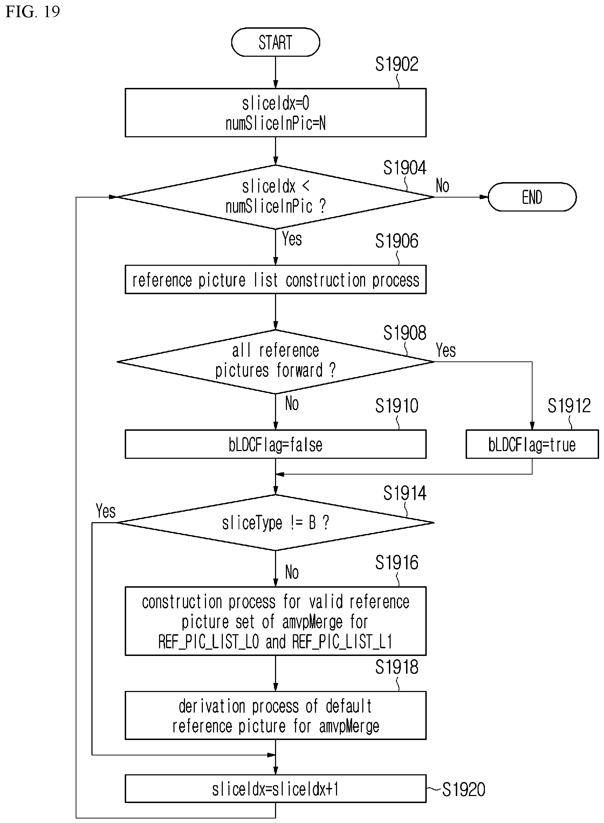

A drawing for Embodiment 3 is shown in FIG. 19. Most of the processes expressed in FIG. 19 operate identically to the processes expressed in FIG. 4 and thus, hereinafter, processes corresponding to differences from FIG. 4 will be described.

According to FIG. 4, after the process of constructing a valid reference picture set of the amvpMerge mode (S416) is performed, the determination on the next slice is performed. According to FIG. 19, after the process of constructing the valid reference picture set of the amvpMerge mode (S1916) is performed and the process of deriving a default reference picture for the amvpMerge mode (S1918) is performed, the determination on the next slice is performed. Here, the process S1918 may correspond to the process of deriving an index of the default reference picture (default reference index) by referencing the reference picture set determined to be available in the process S1916.

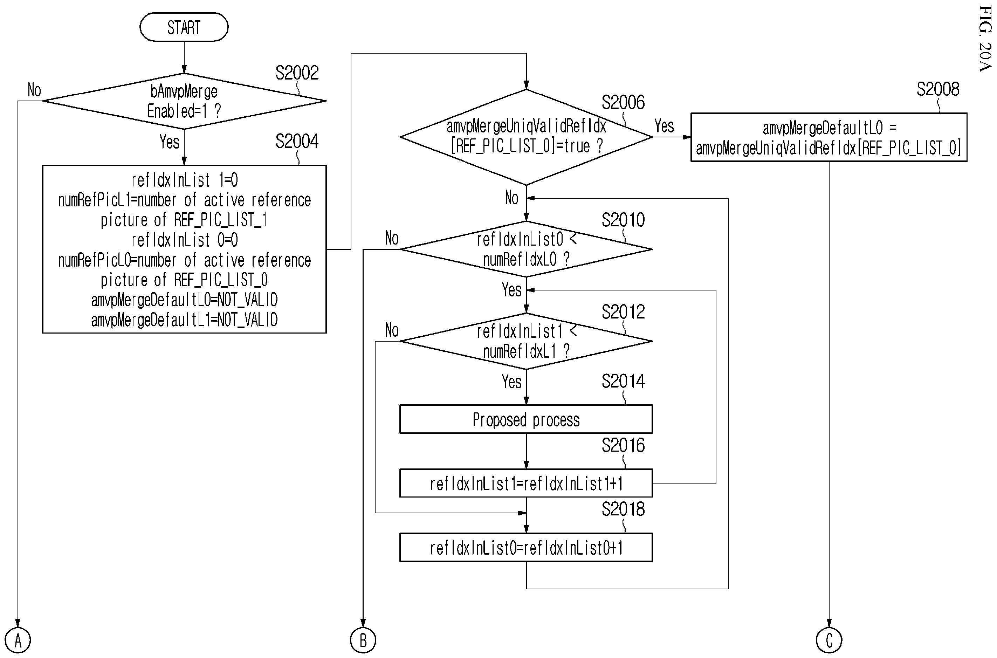

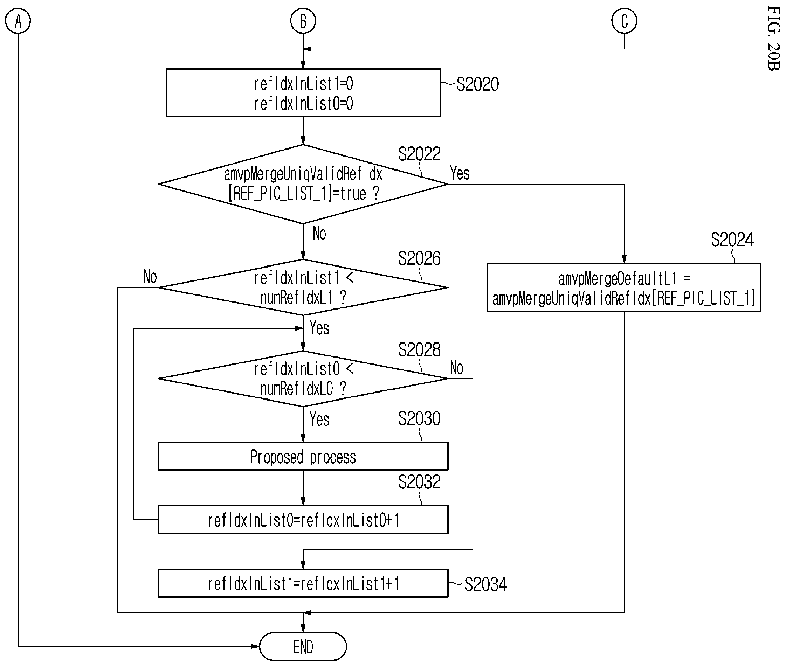

The process of deriving the default reference picture may be performed through the processes represented in FIG. 20a and FIG. 20b.

Referring to FIGS. 20a and 20b, if there is a reference picture set available in a current slice, that is, if bAmvpMergeEnabledFlag is true (1) (S2002), a process of deriving a default reference picture is performed. Various variables are defined (S2004), and it is determined whether the amvpMergeUniqValidRefIdx value of the reference picture list L0 is true (S2006). If true, the amvpMergeUniqValidRefIdx of the reference picture list L0 is set as a default reference picture in the L0 direction (S2008), and if false, it is determined whether a determination has been made on all reference pictures in the L0 direction (S2010). If there is a reference picture in the L0 direction on which a determination has not been performed, it is determined whether the determination has been made on all reference pictures in the L1 direction (S2012), and if there is a reference picture in the L1 direction on which a determination has not been performed, the proposed process is performed (S2014). The processes S2010 to S2014 are repeatedly performed (S2016, S2018) so that a determination is completed on all reference pictures in the L0 direction and all reference pictures in the L1 direction.

After the reference picture indices in the L1 direction and the L0 direction are initialized (S2020), it is determined whether the amvpMergeUniqValidRefIdx value of the reference picture list L1 is true (S2022). If true, the amvpMergeUniqValidRefIdx of the reference picture list L1 is set as a default reference picture in the L1 direction (S2024), and if false, it is determined whether a determination has been made on all reference pictures in the L1 direction (S2026). If there is a reference picture in the L0 direction on which the determination has not been made, it is determined whether the determination has been made on all reference pictures in the L0 direction (S2028), and if there is a reference picture in the L0 direction on which the determination has not been made, the proposed process is performed (S2030). The processes S2026 to S2030 are repeatedly performed (S2032, S2034) to complete the determination on all reference pictures in the L1 direction and all reference pictures in the L0 direction.

The proposed process implies that the value of amvpMergeDefaultLX is derived when the following conditions are satisfied, where LX represents REF_PIC_LIST_0 and REF_PIC_LIST_1.

1. amvpMergeValidRefPair[refIdxInLX][refIdxInLY] == true

2. abs( POC of reference picture indicated by refIdxInLX - POC of current picture) == abs( POC of reference picture indicated by refIdxInLY - POC of current picture)

3. reference picture which has smallest value of abs( POC of reference picture indicated by refIdxInLX - POC of current picture)

4. reference picture which has smallest value of abs( POC of reference picture indicated by refIdxInLY - POC of current picture)

The proposed process may define a reference picture satisfying Condition 2 when Condition 1 is satisfied as a default reference picture.

The proposed process may define a reference picture satisfying Condition 3 when Condition 1 is satisfied as a default reference picture in the LX direction.

The proposed process may define a reference picture satisfying Condition 4 when Condition 1 is satisfied as a default reference picture in the LX direction.

**Embodiment 3-4**

Embodiment 3-4 is a modification of Embodiment 1-5, and proposes a method of constructing a prediction candidate in a process of deriving motion information through an amvpMerge mode in a coding unit or prediction unit.

In the process of deriving a merge candidate list for amvpMerge mode prediction, motion prediction information may be derived by scaling TMVP prediction motion information targeting a default reference picture index.

In addition, in the process of deriving the merge candidate list for amvpMerge mode prediction, motion prediction information may be derived by scaling HMVP and AffineHMVP prediction motion information targeting the default reference picture index.

In addition, in the process of deriving the merge candidate list for amvpMerge mode prediction, motion prediction information may be derived by scaling pairwise prediction motion information targeting the default reference picture index.

In addition, in the process of deriving the merge candidate list for amvpMerge mode prediction, motion prediction information may be derived by scaling fallback prediction motion information targeting the default reference picture index.

**Embodiment 5**

Embodiment 5 is a modification of Embodiment 1-5 and proposes a method for sorting a merge candidate list (merge candidates within a merge candidate list).

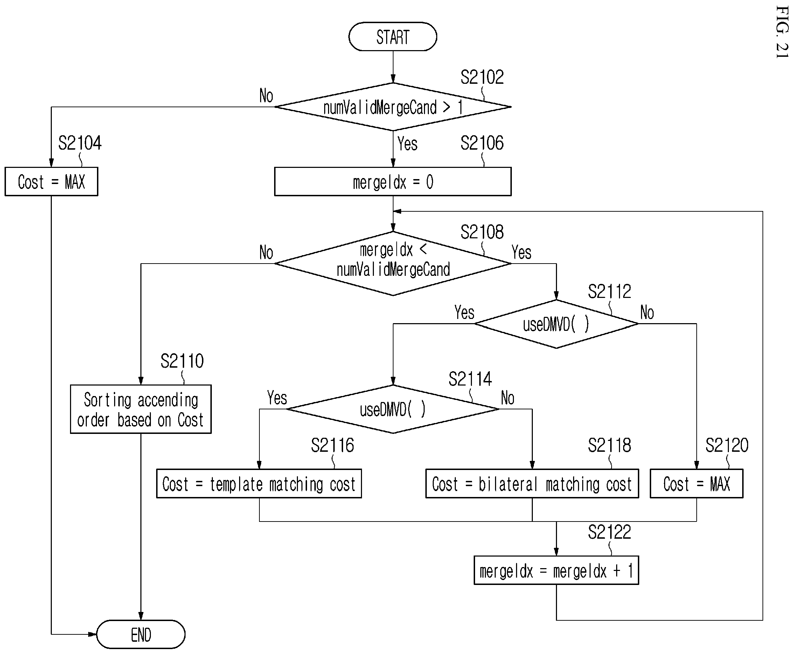

A drawing for Embodiment 5 is shown in FIG. 21. Most of the processes represented in FIG. 21 operate identically to the processes represented in FIG. 14 and thus, hereinafter, processes corresponding to differences from FIG. 14 will be described.

According to FIG. 14, when DMVD is enabled in a current block (S1410), only the process of calculating bi-lateral matching cost for all constructed merge candidates (S1412) is performed. According to FIG. 21, when DMVD is enabled in the current block (S2112), a process of calculating template matching cost (S2116) or a process of calculating bi-lateral matching cost (S2118) is performed depending on whether the proposed condition is satisfied (S2114).

The proposed conditions may be defined as follows:

1. bLDCFlag == true
2. reference picture of merge candidate and reference picture of amvp candidate is not bidirectional
3. reference picture of merge candidate and reference picture of amvp candidate is not true-bidirectional

The proposed condition may include one of the three conditions above. In addition, the proposed condition may include conditions 1 and 2, or conditions 1 and 3.

The bidirectional of Condition 2 and the true-bidirectional of Condition 3 may be defined as in Equations 4 and 5 below, when the POC of the reference picture of the merge candidate is defined as pocMerge, the POC of the reference picture of the AMVP candidate is defined as pocAmvp, and the POC of the current picture is defined as curPoc.

[Equation 4]
$$\text{bidirectional: } (pocMerge - curPoc) \times (pocAmvp - curPoc) < 0$$

true-bidirectional: ((pocMerge - curPoc) x (pocAmvp - curPoc) < 0 ) && abs(pocMerge - curPoc) = = abs(pocAmvp - curPoc)  [Equation 5]

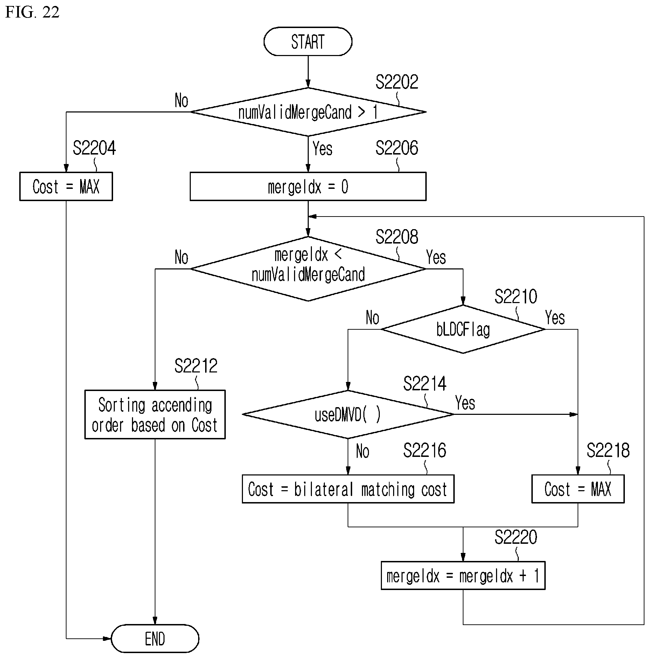

Another drawing for Embodiment 5 is shown in FIG. 22. Most of the processes represented in FIG. 22 operate identically to the processes represented in FIG. 14, and thus, hereinafter, only the processes corresponding to the differences from FIG. 14 will be described.

Referring to FIG. 22, when bLDCFlag is false (S2210) and DMVD is enabled in the current block (S2214), a process of calculating template matching cost (S2216) is performed. When bLDCFlag is true (S2210), that is, when all reference pictures of the current slice are backward or forward, the cost is defined as the maximum value without separate cost calculation (S2218). This operation is practically not affected by the sorting performance when all reference pictures of the current slice are backward or forward, so that the order of the derived merge candidate list is maintained.

## Embodiment 6

Embodiment 6 is a modification of Embodiments 1-5 and 1-6, and proposes a method of constructing a prediction candidate in a process of deriving motion information through an amvpMerge mode in a coding unit or a prediction unit and a method of refining motion information.

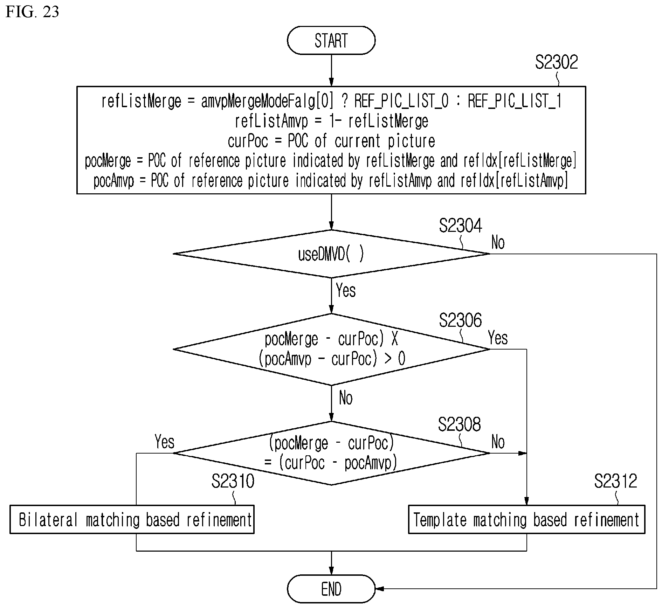

An example for Embodiment 6 is shown in FIG. 23. Most of the processes represented in FIG. 23 operate identically to the processes represented in FIG. 16, and thus, hereinafter, processes corresponding to differences from FIG. 16 will be described.

According to FIG. 16, after a process of determining whether DMVD is enabled (S1604) is performed, a process of considering a distance between a current picture and a reference picture (S1606) is performed. According to FIG. 23, if DMVD is enabled (S2304), after determining whether the current picture exists between the reference picture of the merge candidate and the reference picture of the AMVP candidate based on the POC (S2306), the process of considering the distance between the current picture and the reference picture (S2308) is performed.

When the process S2304 and the process S2306 are combined, the satisfaction of the following bidirectional and true-bidirectional may be determined. pocMerge represents the POC of the reference picture of the merge candidate, pocAMVP represents the POC of the reference picture of the amvp candidate, and curPoc represents the POC of the current picture.

- bidirectional: (pocMerge - curPoc) x (pocAmvp - curPoc) < 0
- true-bidirectional: ((pocMerge - curPoc) x (pocAmvp - curPoc) < 0 ) && abs(pocMerge - curPoc) = = abs(pocAmvp - curPoc)

In the case of a reference picture set without a bidirectional relationship, refinement is performed using a template matching method (S2310), and if it satisfies bi-directional but does not have a true-bidirectional relationship, refinement is performed using the template matching method (S2312).

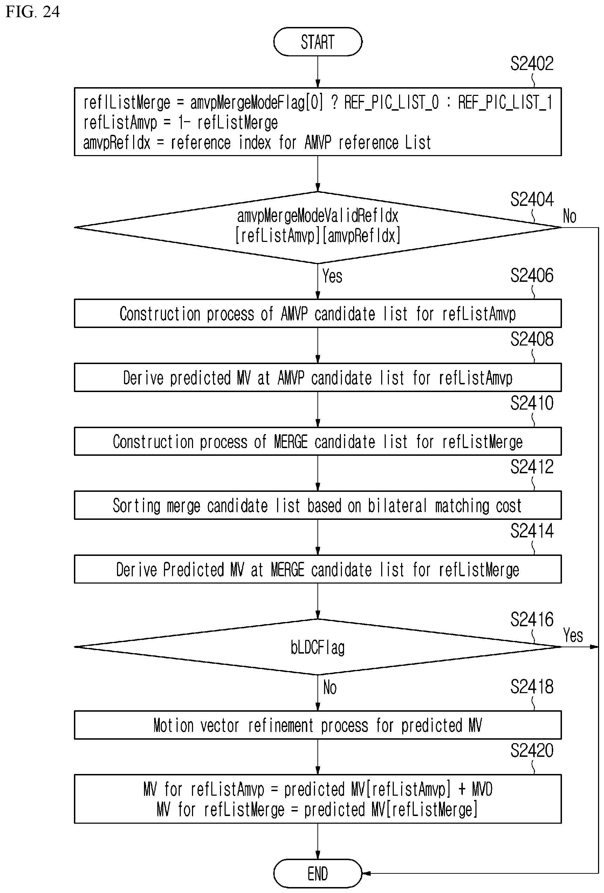

Another example for Embodiment 6 is shown in FIG. 24. Most of the processes represented in FIG. 24 operate identically to the processes represented in FIG. 11, and thus, hereinafter, only the processes corresponding to the differences from FIG. 11 will be described.

According to FIG. 11, after the process of deriving a predicted motion vector based on the merge candidate list (S1114) is performed, the process of refining the predicted motion vector (S1116) is performed. According to FIG. 24, the predicted motion vector is derived based on the merge candidate list (S2414), and the value of bLDCFlag is determined (S2416). If bLDCFlag is false, the process of refining the predicted motion vector (S2418) is performed, and if bLDCFlag is true, the process is terminated.

According to Embodiment 6, if bLDCFlag is true, i.e., if all reference pictures of the current slice are backward or forward, the process of refining the motion vector may be skipped.

## Embodiment 7

Embodiment 7 proposes a method of deriving motion information for an amvpMerge mode in the case of a low delay picture.

In the process of signaling reference picture index, AMVP candidate index, MVD, etc. for prediction direction that derives motion information in an AMVP prediction mode, an AMVP candidate index may be derived implicitly without signaling the AMVP candidate index.

The AMVP movement information may be derived as follows.

1. After constructing multiple AMVP prediction candidates without signaling the AMVP candidate index, the AMVP prediction candidates are sorted based on the decoder side template cost, and the prediction candidate with the minimum cost is derived as the AMVP motion information of the current block.

2. Without signaling the AMVP candidate index, a list is constructed with only one AMVP prediction candidate and derived from the AMVP movement information of the current block.

In the process of signaling reference picture index, AMVP candidate index, MVD, etc. for prediction direction that derives motion information in AMVP prediction mode, MVD may be set to zero MVD without signaling MVD. Setting to zero MVD may be performed when at least one of the following conditions is satisfied.

1. Decoder side template cost-based AMVP prediction candidate list sorting process is performed
2. Motion information of amvpMerge mode based on decoder side template cost will be refined

For a prediction direction that induces movement in the merge prediction mode, the merge prediction candidate at index 0 of the prediction candidate list is used without separate signaling. Here, the merge prediction candidate list may be a prediction candidate list that has gone through the process of embodiment 4 or embodiment 5.

**Encoding method and decoding method**

Hereinafter, an image encoding method and a decoding method performed by the image encoding apparatus 100 and the image decoding apparatus 200 according to one embodiment will be described.

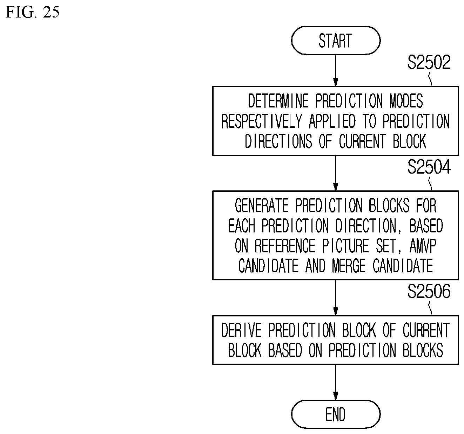

Referring to FIG. 25, the image encoding apparatus 100 and the image decoding apparatus 200 may determine prediction modes to be respectively applied to prediction directions of a current block (S2502). Here, the prediction modes may include an AMVP mode and a merge mode. For example, among the prediction directions, a prediction mode of a certain prediction direction may be determined to be an AMVP mode, and a prediction mode of the other prediction direction may be determined to be a merge mode.

The image encoding apparatus 100 and the image decoding apparatus 200 may generate prediction blocks for each prediction direction based on at least one reference picture set, at least one AMVP candidate (AMVP prediction candidate), and at least one merge candidate (merge prediction candidate) (S2504). The image encoding apparatus 100 and the image decoding apparatus 200 may derive a (final) prediction block of the current block based on the prediction blocks generated from the process S2504 (S2506).

At least one reference picture set may be constructed based on the POC of the reference pictures of the current slice including the current block being smaller or larger than the POC of a current picture including the current block.

Additionally, at least one reference picture set may be constructed if a predetermined first condition is satisfied. Here, the predetermined first condition may include at least one of whether DMVD is applied to the current block and status information of reference pictures.

In addition, at least one reference picture set may include a default reference picture based on at least one of availability of a reference picture in a certain prediction direction and a reference picture in the other prediction direction, and satisfaction of a predetermined second condition. Here, the availability may mean whether the reference picture is a reference picture available in the amvpMerge mode. In addition, the predetermined second condition may include at least one of whether a POC difference (first difference) between the current picture and the reference picture in a certain prediction direction is minimum, and whether a POC difference (second difference) between the current picture and the reference picture in the other prediction direction is minimum. According to embodiments, the predetermined second condition may further include whether the first difference and the second difference are equal to each other.

If a default reference picture is included in the reference picture set, the merge candidate may be scaled using the default reference picture, and a prediction block in the other prediction direction (a prediction direction to which the merge mode is applied) may be derived based on the scaled merge candidate.

At least one merge candidate may be sorted based on whether the POCs of the reference pictures of the current slice are smaller or larger than the POC of the current picture. The sorting of the merge candidates may be performed based on any one of the template matching error or the bi-lateral matching error, depending on whether a predetermined third condition is satisfied. The predetermined third condition may include whether the reference picture of the merge candidate and the reference picture of the AMVP candidate have different prediction directions. In addition, the predetermined third condition may include whether the 'POC difference between the reference picture of the merge candidate and the current picture' and the 'POC difference between the reference picture of the AMVP candidate and the current picture' have the same absolute value.

The AMVP candidate and the merge candidate may be refined based on any one of the template matching error or the bi-lateral matching error, based on whether a predetermined fourth condition is satisfied. The fourth condition may include whether the reference picture of the merge candidate and the reference picture of the AMVP candidate have different prediction directions. In addition, the predetermined fourth condition may include whether the 'POC difference between the reference picture of the merge candidate and the current picture' and the 'POC difference between the reference picture of the AMVP candidate and the current picture' have the same absolute value.

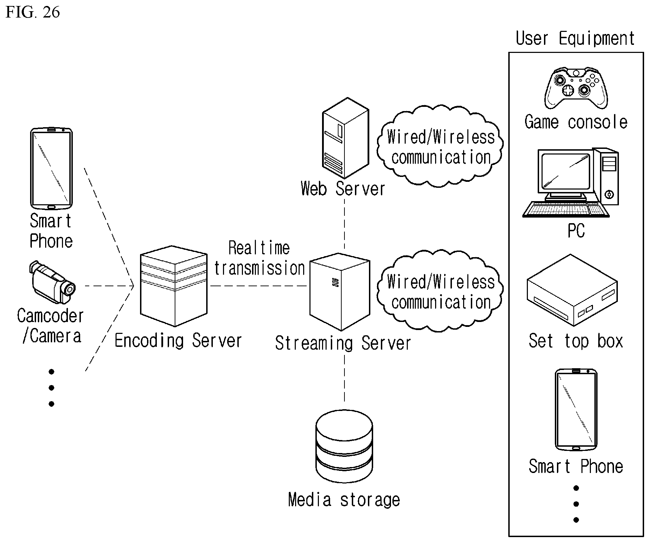

FIG. 26 is a view showing a content streaming system, to which an embodiment of the present disclosure is applicable.

As shown in FIG. 2, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1.  An image decoding method performed by an image decoding apparatus, the image decoding method comprising:

    determining prediction modes respectively applied to prediction directions of a current block, the prediction modes including an advanced motion vector prediction (AMVP) mode and a merge mode;
    generating prediction blocks for the prediction directions, based on at least one reference picture set, at least one AMVP candidate and at least one merge candidate; and
    deriving a prediction block of the current block based on the prediction blocks,
    wherein, among the prediction directions, a prediction mode of a certain prediction direction is determined to be the AMVP mode and a prediction mode of the other prediction direction is determined to be the merge mode.

2.  The image decoding method of claim 1, wherein the reference picture set is constructed based on picture order counts (POCs) of reference pictures of a current slice including the current block being smaller or larger than a POC of a current picture including the current block.

3.  The image decoding method of claim 2,

    wherein the reference picture set is further constructed based on a predetermined first condition being satisfied, and
wherein the predetermined first condition includes at least one of whether a decoder side motion vector derivation (DMVD) is applied to the current block or status information of the reference pictures.

4. The image decoding method of claim 3, wherein the reference picture set is further constructed based on whether the reference picture of the certain prediction direction and the reference picture of the other prediction direction are the same or whether a POC difference between the reference picture of the certain prediction direction and the reference picture of the other prediction direction is equal to or greater than a threshold.

5. The image decoding method of claim 1, wherein the reference picture set includes a default reference picture, based on at least one of whether the reference picture of the certain prediction direction and the reference picture of the other prediction direction are available or whether a predetermined second condition is satisfied.

6. The image decoding method of claim 5, wherein the predetermined second condition includes at least one of whether a POC difference between the current picture and the reference picture of the certain prediction direction is minimum or whether a POC difference between the current picture and the reference picture of the other prediction direction is minimum.

7. The image decoding method of claim 5, wherein the predetermined second condition includes whether a first difference which is a POC difference between the current picture and the reference picture of the certain prediction direction and a second difference which is a POC difference between the current picture and the reference picture of the other prediction direction are the same.

8. The image decoding method of claim 5,

wherein the merge candidate is scaled using the default reference picture, and
wherein the prediction block of the other prediction direction is derived based on the scaled merge candidate.

9. The image decoding method of claim 1, wherein the at least one merge candidate is ordered based on POCs of reference pictures of a current slice including the current block being smaller or larger than a POC of a current picture including the current block.

10. The image decoding method of claim 9, wherein the at least one merge candidate is ordered based on any one of template matching error or bi-lateral matching error based on whether a predetermined third condition is satisfied.

11. The image decoding method of claim 10, wherein the predetermined third condition includes whether a reference picture of the merge candidate and a reference picture of the AMVP candidate have different prediction directions.

12. The image decoding method of claim 11, wherein the predetermined third condition further includes whether a POC difference between the reference picture of the merge candidate and the current picture and a POC difference between the reference picture of the AMVP candidate and the current picture have the same absolute value.

13. The image decoding method of claim 1,

wherein the AMVP candidate and the merge candidate are refined based on any one of template matching error or bi-lateral matching error based on whether a predetermined fourth condition is satisfied, and
wherein the fourth condition includes a reference picture of the merge candidate and a reference picture of the AMVP candidate have different prediction directions.

14. The image decoding method of claim 13, wherein the predetermined fourth condition further includes whether a POC difference between the reference picture of the merge candidate and the current picture and a POC difference between the reference picture of the AMVP candidate and the current picture have the same absolute value.

15. An image encoding method performed by an image encoding apparatus, the image encoding method comprising:

determining prediction modes respectively applied to prediction directions of a current block, the prediction modes including an advanced motion vector prediction (AMVP) mode and a merge mode;
generating prediction blocks for the prediction directions, based on at least one reference picture set, at least one AMVP candidate and at least one merge candidate; and
deriving a prediction block of the current block based on the prediction blocks,
wherein, among the prediction directions, a prediction mode of a certain prediction direction is determined to be the AMVP mode and a prediction mode of the other prediction direction is determined to be the merge mode.

16. A method of transmitting a bitstream generated by an image encoding method, the image encoding method comprising:

determining prediction modes respectively applied to prediction directions of a current block, the prediction modes including an advanced motion vector prediction (AMVP) mode and a merge mode;
generating prediction blocks for the prediction directions, based on at least one reference picture set, at least one AMVP candidate and at least one merge candidate; and
deriving a prediction block of the current block based on the prediction blocks,
wherein, among the prediction directions, a prediction mode of a certain prediction direction is determined to be the AMVP mode and a prediction mode of the other prediction direction is determined to be the merge mode.

17. A computer-readable recording medium storing a bitstream generated by the image encoding method of claim 15.

FIG. 1

FIG. 2

BITSTREAM

190 ENTROPY ENCODER
130 QUANTIZER
120 TRANSFORMER
115
140 DEQUANTIZER
150 INVERSE TRANSFORMER
155

100 IMAGE ENCODING APPARATUS
110 IMAGE PARTITIONER
INPUT IMAGE

INTER PREDICTOR 180
INTRA PREDICTOR 185

DPB 170
MEMORY
FILTER 160

FIG. 3

FIG. 4

```
                        ┌──────────┐
                        │  START   │
                        └────┬─────┘
                             │                S402
                 ┌───────────▼───────────┐
                 │      sliceIdx=0        │
                 │    numSliceInPic=N     │
                 └───────────┬───────────┘
                             │
                             │          S404
                        ╱────▼────╲              No      ┌───────┐
                       ╱ sliceIdx < ╲────────────────────│  END  │
                       ╲numSliceInPic?╱                   └───────┘
                        ╲────┬────╱
                          Yes│          S406
                 ┌───────────▼────────────────────────┐
                 │ reference picture list construction process │
                 └───────────┬────────────────────────┘
                             │
                             │              S408
                        ╱────▼────╲            Yes
                       ╱ all reference╲──────────────────┐
                       ╲pictures forward?╱               │
                        ╲────┬────╱                       │
                          No │       S410                 │ S412
                 ┌───────────▼───────────┐     ┌──────────▼──────────┐
                 │    bLDCFlag=false     │     │   bLDCFlag=true     │
                 └───────────┬───────────┘     └──────────┬──────────┘
                             │◄─────────────────────────────┘
                             │              S414
             Yes        ╱────▼────╲
        ┌──────────────╱ sliceType != B ?╲
        │              ╲────┬────╱
        │                 No │           S416
        │      ┌─────────────▼──────────────────┐
        │      │ construction process for valid reference │
        │      │    picture set of amvpMerge for          │
        │      │  REF_PIC_LIST_L0 and REF_PIC_LIST_L1     │
        │      └─────────────┬──────────────────┘
        │                    │
        │      ┌─────────────▼──────────────┐
        └─────►│    sliceIdx=sliceIdx+1      │──── S418
               └────────────────────────────┘
```

FIG. 5A

EP 4 554 222 A1

START

S512
Curpoc= POC of the picture which is including current slice
bAmvpMergeEnabled=false
Array of amvpMergeValidRefPair set to false
Array of amvpMergeValidRefIdx set to false
Array of amvpMergeUniqValidRefIdx set to NOT_VALID

S504
bLDCFlag=ture ? — Yes

No

S506
refIdxInListX=0
numRefPicLX=number of active reference picture of REF_PIC_LIST_X

S508
refIdxInListY=0
numRefPicLY=number of active reference picture of REF_PIC_LIST_Y

S510
uniqValidRefIdx=NOT_VALID
validRefIdxCnt=0
bAmvpMergeEnabled=false

S512
refIdxListX < numRefIdxLX ? — Yes

No

S514
validRefIdxCnt=1 ? — Yes

No

S516
amvpMergeUniqValidRefIdx [REF_PIC_LIST_X] = uniqValidRefIdx

END

A

FIG. 5B

A

Valid=false — S518

refIdxListY < numRefIdxLY ? — S520 → Yes

No

valid=true ? — S522 → No

Yes — S524

bAmvpMergeEnabled=true
amvpMergeValidRefIdx[REF_LIST_X][refIdxListX]=true
uniqValidRefIdx=refIdxInListX
validRefIdxCnt=validRefIdxCnt+1

refIdxInListX=refIdxInListX+1 — S526

condition 1 — S528 → No / Yes — S530

pocLX=POC of a reference picture indicated by
refIdxInListX in reference picture REF_PIC_LIST_X
pocLY=POC of a reference picture indicated by
refIdxInListY in reference picture 1−REF_PIC_LIST_X

condition 2 — S532 → No / Yes — S534

Valid=ture
amvpMergeValidRefPair[refIdxLX][refIdxLY]=ture

refIdxInListY=refIdxInListY+1 — S536

EP 4 554 222 A1

32

FIG. 6A

FIG. 6B

A

S634 — pu.interDir != 2 ? — No

Yes

S636 — !amvpMergeModeFlag[0] — No

Yes S638

ref_Idx[REF_PIC_LIST_0]

S640

mvp_flag[REF_PIC_LIST_0]

S642 — cu.affine

No ← → Yes S650

mvd_coding(cp0)

S652

mvd_coding(cp1)

S654

mvd_coding(cp2)

S644 — amvpMergeModeFlag[1] && pu.mvpIdx]L0] < 2 ? — Yes

No

S646

mvd_coding(L0)

S648

Mvd[L0].setZero( )

B

FIG. 6C

FIG. 7

```
                    ┌──────────┐
                    │  START   │
                    └────┬─────┘
                         │
                         ▼                              S702
            ◇─────────────────────────────◇  No
            │  isPossibleBiPrediction     │──────────────────┐
            ◇─────────────┬───────────────◇                  │
                         │ Yes            S704               │
                         ▼                                    │
            ┌─────────────────────────────┐                  │
            │        amvpMergeFlag         │                  │
            └─────────────┬───────────────┘                  │
                         │                S706               │
                         ▼                                    │
            ◇─────────────────────────────◇  No              │
            │        amvpMergeFlag         │──────────────────┤
            ◇─────────────┬───────────────◇                  │
                         │ Yes            S708               │
                         ▼                                    │
            ┌─────────────────────────────┐                  │
            │        interDir = 3          │                  │
            └─────────────┬───────────────┘                  │
                         │                S710               │
                         ▼                         Yes        │
            ◇─────────────────────────────◇──────────┐       │
            │          useARL( )          │          │       │
            ◇─────────────┬───────────────◇          │       │
                         │ No              S712      │       │
                         ▼                 Yes        │       │
    No  ◇─────────────────────────────◇──────────┐   │       │
    ┌───│      ph.mvdL1ZeroFlag        │          │   │       │
    │   ◇─────────────────────────────◇          │   │       │
    │ S714                                        ▼   ▼       │
    ▼                                       S716          │
┌──────────────┐                          ┌──────────────┐   │
│ Parse mergeDir│                          │  mergeDir = 1 │   │
└──────┬────────┘                          └──────┬───────┘   │
       │               S718                       │           │
       └──────────────┬──────────────────────────┘           │
                      ▼                                        │
    ┌──────────────────────────────────────────┐             │
    │ amvpMergeModeFlag[mergeDir] = true         │             │
    │ amvpMergeModeFlag[1-mergeDir] = false      │             │
    └──────────────────┬─────────────────────────┘             │
                       ▼                                        │
                 ┌──────────┐                                  │
                 │   END    │◄─────────────────────────────────┘
                 └──────────┘
```

FIG. 8

FIG. 9A

```
START
  ↓
S902  numCand = 0
  ↓
S904  refIdx = 0
      numRefL0 = number of active reference picture of L0
      numRefL1 = number of active reference picture of L1
      numRefLX = max(numRefL0, numRefL1)
  ↓
S906  refIdx < numRefLX ?  — No → (A)
  ↓ Yes
S908  refIdx < numRefL0 ?  — No → S916
  ↓ Yes
S910  amvpMergeValidRefIdx[REF_PIC_LIST_0][refIdx] ?  — No →
  ↓ Yes
S912  Insert refIdx into refPicCombinedListAmvpMerge
  ↓
S914  refIdx = refIdx + 1

S916  refIdx < numRefL1 ?  — No →
  ↓ Yes
S918  RefIdxL1toRefIdxL0[refIdx] is NOT_VALID ?  — No →
  ↓ Yes
S920  amvpMergeValidRefIdx[REF_PIC_LIST_1][refIdx] ?  — No →
  ↓ Yes
S922  Insert refIdx into refPicCombinedListAmvpMerge
  ↓
S924  refIdx = refIdx + 1
```

FIG. 9B

S926: refIdx = 0

S928: redIdx < numRefL1 — No / Yes

S930: RefIdxL1toRefIdxL0[refIdx] is NOT_VALID — No / Yes

S932: amvpMergeValidRefIdx[REF_PIC_LIST_1][refIdx] — No / Yes

S934: Insert refIdx into refPicCombinedListAmvpMerge

S936: refIdx = refIdx + 1

A

END

FIG. 10

FIG. 11

```
                          ┌──────────┐
                          │  START   │
                          └────┬─────┘
                               │                              S1102
  ┌────────────────────────────┴──────────────────────────────────────┐
  │ refListMerge = amvpMergeModeFlag[0] ? REF_PIC_LIST_0 : REF_PIC_LIST_1│
  │ refListAmvp = 1- refListMerge                                       │
  │ amvpRefIdx = reference index for AMVP reference List                │
  └────────────────────────────┬──────────────────────────────────────┘
                               │                              S1104
                    ◇ amvpMergeModeValidRefIdx ◇               No
                    ◇ [refListAmvp][amvpRefIdx] ◇ ─────────────┐
                               │ Yes                  S1106     │
  ┌────────────────────────────┴──────────────────────────────┐│
  │ Construction process of AMVP candidate list for refListAmvp││
  └────────────────────────────┬──────────────────────────────┘│
                               │                      S1108     │
  ┌────────────────────────────┴──────────────────────────────┐│
  │ Derive predicted MV at AMVP candidate list for refListAmvp ││
  └────────────────────────────┬──────────────────────────────┘│
                               │                      S1110     │
  ┌────────────────────────────┴──────────────────────────────┐│
  │ Construction process of MERGE candidate list for refListMerge│
  └────────────────────────────┬──────────────────────────────┘│
                               │                      S1112     │
  ┌────────────────────────────┴──────────────────────────────┐│
  │ Sorting merge candidate list based on bilateral matching cost│
  └────────────────────────────┬──────────────────────────────┘│
                               │                      S1114     │
  ┌────────────────────────────┴──────────────────────────────┐│
  │ Derive Predicted MV at MERGE candidate list for refListMerge│
  └────────────────────────────┬──────────────────────────────┘│
                               │                      S1116     │
  ┌────────────────────────────┴──────────────────────────────┐│
  │ Motion vector refinement process for predicted MV          ││
  └────────────────────────────┬──────────────────────────────┘│
                               │                      S1118     │
  ┌────────────────────────────┴──────────────────────────────┐│
  │ MV for refListAmvp = predicted MV[refListAmvp] + MVD       ││
  │ MV for refListMerge = predicted MV[refListMerge]           ││
  └────────────────────────────┬──────────────────────────────┘│
                               │                                │
                          ┌────┴─────┐                          │
                          │   END    │◄─────────────────────────┘
                          └──────────┘
```

FIG. 12A

START

S1202

numCand = 0
maxStorage = condition 1 ? 5:2
Similarity = condition 1 ? 1:0

S1204

Add MV of spatial candidate(LB→RT→LT position)
into the list Update numCand

S1206

Check similarity and update numCand

S1208

useTMVP( ) &&
numCand < maxStorage && blcockSize
is valid

No

Yes

S1210

Check similarity and add TMVP candidate
into the list Update numCand

S1212

numCand < maxStorage && condition 1

No

Yes

S1214

Add MV of non adjacent spatial candidate
into the list Update numCand

S1216

numCand < maxStorage

No

Yes

S1218

Check similarity and add MV of HMVP candidate
into the list Update numCand

S1220

useDMVD( )

Yes

No

A

B

FIG. 12B

Sort amvp candidate list based on TM cost numCand set to 1    S1222

Refine candidate which has best TM cost using template matching    S1224

Add Zero MV into the list until list is fulfilled    S1226

amvpMergeFlag    S1228

numCand = 1    S1230

numCand = 2
mvCand[1] = mvCand[0]    S1232

numCand =3
mvCand[2] = mvCand[1]
mvCand[1] = mvCand[0]    S1234

END

FIG. 13A

START

S1302 tmMergeFlag

No → S1306 Set Threshold to be 1 → S1314 Set maxNumMergeCand to be value for max number of merge candidate which is indicated at SPS/PPS/PH/SH

Yes → S1304 Set Threshold based on number of pixels → S1308 useAML( )

No → S1312 Set maxNumMergeCand to be value for max number of TM merge candidate which is indicated at SPS/PPS/PH/SH

Yes → S1310 Set maxNumMergeCand to be TM_MRG_MAX_NUM_CAND

S1316 amvpMergeFlag
No
Yes → S1318 amvpMergeModeFlag[0]

No → S1322 amvpRefList = REF_PIC_LIST_0 mergeDir = 2 → (B)

Yes → S1320 amvpRefList = REF_PIC_LIST_1 mergeDir = 1 → (A)

FIG. 13B

FIG. 14

START

S1402

No ← numValidMergeCand > 1

S1418

Cost = MAX

Yes S1404

mergeIdx = 0

S1406

No ← mergeIdx < numValidMergeCand → Yes

S1410

Yes ← useDMVD( ) → No

S1408

Sorting accending order based on Cost

S1412

Cost = bilateral matching cost

S1414

Cost = MAX

S1416

mergeIdx = mergeIdx + 1

END

FIG. 15

```
                        ┌─────────────┐
                        │    START    │
                        └──────┬──────┘
                               │          S1502
                               ▼
        ┌──────────────────────────────────────────────┐
        │ refListMerge = amvpMergeModeFalg[0] ?         │
        │     REF_PIC_LIST_0 : REF_PIC_LIST_1           │
        │     refListAmvp = 1- refListMerge             │
        └──────────────────────┬───────────────────────┘
                               │          S1504
                               ▼
        ┌──────────────────────────────────────────────┐
        │ MV[refListAmvp] = set as MV[MVPIdx]           │
        │          of amvp candidate list               │
        │ refIdx[refListAmvp] = set as refIdxAmvp       │
        └──────────────────────┬───────────────────────┘
                               │                    S1506
     0 or 2                    ▼
   ◄───────────────◇─────────────────────◇
   │                        MVPIdx
   │                         │ 1
   │                         ▼                  S1508
   │              ◇───────────────────────◇
   │    Yes       │   numValidMergeCand = 1 │   No
   ◄──────────────◇───────────────────────◇──────────┐
   │   S1510                                          │  S1512
   ▼                                                  ▼
┌──────────────────────────┐        ┌──────────────────────────┐
│  MV[refListMerge] = set as│       │  MV[refListMerge] = set as│
│  MV[0] of merge candidate │       │  MV[1] of merge candidate │
│  list                     │       │  list                     │
│  refIdx[refListMerge] = set│      │  refIdx[refListMerge] = set│
│  as refIdx[0] of merge     │      │  as refIdx[1] of merge     │
│  candidate list            │      │  candidate list            │
└────────────┬─────────────┘        └─────────────┬────────────┘
             │                                     │
             └──────────────┬──────────────────────┘
                            ▼
                    ┌─────────────┐
                    │     END     │
                    └─────────────┘
```

FIG. 16

```
                              ┌─────────┐
                              │  START  │
                              └─────────┘
                                   │
                                   ▼                              S1602
┌──────────────────────────────────────────────────────────────────────┐
│ refListMerge = amvpMergeModeFalg[0] ? REF_PIC_LIST_0 : REF_PIC_LIST_1  │
│                    refListAmvp = 1- refListMerge                       │
│                    curPoc = POC of current picture                     │
│ pocMerge = POC of reference picture indicated by refListMerge and refIdx[refListMerge] │
│  pocAmvp = POC of reference picture indicated by refListAmvp and refIdx[refListAmvp]   │
└──────────────────────────────────────────────────────────────────────┘
                                   │
                                   ▼                    S1604
                         ╱─────────────────╲              No
                        ╱     useDMVD( )     ╲────────────────────┐
                         ╲─────────────────╱                      │
                                   │ Yes                          │
                                   ▼                    S1606      │
               Yes       ╱─────────────────────╲          No      │
          ┌─────────────╱  (pocMerge - curPoc)  ╲────────────┐    │
          │             ╲  = (curPoc - pocAmvp)  ╱           │    │
          │              ╲─────────────────────╱            │    │
          │     S1608                                 S1610  ▼    │
┌─────────▼───────────────────────┐       ┌───────────────────────────────┐
│ Bilateral matching based refinement │   │ Template matching based refinement │
└─────────────────────────────────┘       └───────────────────────────────┘
          │                                         │            │
          └─────────────────┬───────────────────────┘            │
                            ▼                                     │
                       ┌─────────┐ ◄───────────────────────────────┘
                       │   END   │
                       └─────────┘
```

FIG. 17

FIG. 18A

START

S1802
Curpoc= POC of the picture which is including
current slice
bAmvpMergeEnabled=false
Array of amvpMergeValidRefPair set to false
Array of amvpMergeValidRefIdx set to false
Array of amvpMergeUniqValidRefIdx set to
NOT_VALID

S1806
refIdxInListX=0
numRefPicLX=number of active
reference picture of REF_PIC_LIST_X

S1808
refIdxInListY=0
numRefPicLY=number of active
reference picture of REF_PIC_LIST_Y

S1810
uniqValidRefIdx=NOT_VALID
validRefIdxCnt=0
bAmvpMergeEnabled=false

S1812
refIdxListX <
numRefIdxLX ?
Yes
No

S1814
validRefIdxCnt=1 ?
Yes
No

S1816
amvpMergeUniqValidRefIdx
[REF_PIC_LIST_X] = uniqValidRefIdx

A

END

FIG. 18B

EP 4 554 222 A1

(A)

S1818
Valid=false

S1820
refIdxListY < numRefIdxLY ?

S1822
valid=true ?

S1824
bAmvpMergeEnabled=true
amvpMergeValidRefIdx[REF_LIST_X][refIdxListX]=true
uniqValidRefIdx=refIdxInListX
validRefIdxCnt=validRefIdxCnt+1

S1826
refIdxInListX=refIdxInListX+1

S1828
bLDCFlag=1 ?

S1830
Proposed condition checking process

S1832
Condition 1

S1834
pocLX=POC of a reference picture indicated by
refIdxInListX in reference picture REF_PIC_LIST_X
pocLY=POC of a reference picture indicated by
refIdxInListY in reference picture 1-REF_PIC_LIST_X

S1836
bLDCFlag=1 ?

S1838
Condition 2

S1840
condition 3

S1842
Valid=ture
amvpMergeValidRefPair[refIdxLX][refIdxLY]=ture

S1844
refIdxInListY=refIdxInListY+1

FIG. 19

FIG. 20A

EP 4 554 222 A1

START

S2002

bAmvpMerge
Enabled=1 ?

No → A

Yes

S2004

refIdxInList 1=0
numRefPicL1=number of active reference
picture of REF_PIC_LIST_1
refIdxInList 0=0
numRefPicL0=number of active reference
picture of REF_PIC_LIST_0
amvpMergeDefaultL0=NOT_VALID
amvpMergeDefaultL1=NOT_VALID

S2006

amvpMergeUniqValidRefIdx
[REF_PIC_LIST_0]=true ?

Yes → S2008

amvpMergeDefaultL0 =
amvpMergeUniqValidRefIdx[REF_PIC_LIST_0]

No

S2010

refIdxInList0 <
numRefIdxL0 ?

No → B

Yes

S2012

refIdxInList1 <
numRefIdxL1 ?

No

Yes

S2014

Proposed process

S2016

refIdxInList1=refIdxInList1+1

S2018

refIdxInList0=refIdxInList0+1

A

B

C

FIG. 20B

S2020: refIdxInList1=0
refIdxInList0=0

S2022: amvpMergeUniqValidRefIdx[REF_PIC_LIST_1]=true ?
— Yes →
S2024: amvpMergeDefaultL1 = amvpMergeUniqValidRefIdx[REF_PIC_LIST_1]
— No →

S2026: refIdxInList1 < numRefIdxL1 ?
— Yes →
S2028: refIdxInList0 < numRefIdxL0 ?
— Yes →
S2030: Proposed process
S2032: refIdxInList0=refIdxInList0+1
— No →
S2034: refIdxInList1=refIdxInList1+1

END

FIG. 21

EP 4 554 222 A1

FIG. 22

```
                          ┌─────────────┐
                          │   START     │
                          └──────┬──────┘
                                 │
                                 ▼          S2202
                  No    ╱──────────────────╲
           ┌───────────◄  numValidMergeCand > 1 ►
           │           ╲──────────────────╱
           │                    │ Yes        S2206
  S2204    │                    ▼
           ▼              ┌──────────────┐
     ┌──────────┐         │  mergeIdx = 0│
     │ Cost = MAX│        └──────┬───────┘
     └──────────┘                │◄──────────────────────────────┐
                                 ▼          S2208                 │
                  No    ╱──────────────────╲                      │
           ┌───────────◄    mergeIdx <       ► Yes                │
           │           ╲  numValidMergeCand ╱                     │
           │           ╲──────────────────╱                      │
           │                              │                       │
           │                              ▼        S2210          │
           │              No    ╱──────────────╲   Yes            │
           │           ┌───────◄   bLDCFlag     ►────────┐        │
  S2212    │           │        ╲──────────────╱         │        │
           ▼           ▼       S2214                      │        │
  ┌──────────────┐  ╱──────────────╲  Yes                 │        │
  │Sorting accending◄  useDMVD( )    ►──────────────┐     │        │
  │order based on Cost╲──────────────╱              │     │        │
  └──────┬───────┘         │ No    S2216            ▼     ▼        │
         │                 ▼                    S2218             │
         │        ┌──────────────────────┐  ┌──────────┐          │
         │        │Cost = bilateral matching cost│ │Cost = MAX│   │
         │        └──────────┬───────────┘  └────┬─────┘          │
         │                   │       S2220       │                │
         │                   ▼                   │                │
         │        ┌──────────────────────┐       │                │
         │        │ mergeIdx = mergeIdx + 1│◄─────┘                │
         │        └──────────┬───────────┘                        │
         │                   └──────────────────────────────────────┘
         ▼
   ┌──────────┐
   │   END    │
   └──────────┘
```

FIG. 23

START

S2302

refListMerge = amvpMergeModeFalg[0] ? REF_PIC_LIST_0 : REF_PIC_LIST_1
refListAmvp = 1- refListMerge
curPoc = POC of current picture
pocMerge = POC of reference picture indicated by refListMerge and refIdx[refListMerge]
pocAmvp = POC of reference picture indicated by refListAmvp and refIdx[refListAmvp]

S2304

useDMVD( )  No

Yes

S2306

pocMerge - curPoc) X
(pocAmvp - curPoc) > 0  Yes

No

S2308

(pocMerge - curPoc)
= (curPoc - pocAmvp)  No

Yes

S2310

Bilateral matching based refinement

S2312

Template matching based refinement

END

FIG. 24

```
                    ┌─────────┐
                    │  START  │
                    └─────────┘
                         │
                         ▼                                          S2402
┌──────────────────────────────────────────────────────────────┐
│ reflListMerge = amvpMergeModeFlag[0] ? REF_PIC_LIST_0 : REF_PIC_LIST_1 │
│ refListAmvp = 1- refListMerge                                  │
│ amvpRefIdx = reference index for AMVP reference List           │
└──────────────────────────────────────────────────────────────┘
                         │
                         ▼                                          S2404
              ╱──────────────────────────╲                         No
            ╱      amvpMergeModeValidRefIdx    ╲──────────────────────┐
            ╲      [refListAmvp][amvpRefIdx]    ╱                     │
              ╲──────────────────────────╱                           │
                         │ Yes                       S2406           │
                         ▼                                           │
┌──────────────────────────────────────────────────────────────┐    │
│   Construction process of AMVP candidate list for refListAmvp  │    │
└──────────────────────────────────────────────────────────────┘    │
                         │                            S2408          │
                         ▼                                           │
┌──────────────────────────────────────────────────────────────┐    │
│   Derive predicted MV at AMVP candidate list for refListAmvp   │    │
└──────────────────────────────────────────────────────────────┘    │
                         │                            S2410          │
                         ▼                                           │
┌──────────────────────────────────────────────────────────────┐    │
│  Construction process of MERGE candidate list for refListMerge │    │
└──────────────────────────────────────────────────────────────┘    │
                         │                            S2412          │
                         ▼                                           │
┌──────────────────────────────────────────────────────────────┐    │
│  Sorting merge candidate list based on bilateral matching cost │    │
└──────────────────────────────────────────────────────────────┘    │
                         │                            S2414          │
                         ▼                                           │
┌──────────────────────────────────────────────────────────────┐    │
│   Derive Predicted MV at MERGE candidate list for refListMerge │    │
└──────────────────────────────────────────────────────────────┘    │
                         │                            S2416          │
                         ▼                                            Yes
              ╱──────────────────────────╲──────────────────────────┤
            ╲           bLDCFlag            ╱                         │
              ╲──────────────────────────╱                           │
                         │ No                         S2418          │
                         ▼                                           │
┌──────────────────────────────────────────────────────────────┐    │
│        Motion vector refinement process for predicted MV       │    │
└──────────────────────────────────────────────────────────────┘    │
                         │                            S2420          │
                         ▼                                           │
┌──────────────────────────────────────────────────────────────┐    │
│  MV for refListAmvp = predicted MV[refListAmvp] + MVD          │    │
│  MV for refListMerge = predicted MV[refListMerge]              │    │
└──────────────────────────────────────────────────────────────┘    │
                         │                                           │
                         ▼                                           │
                    ┌─────────┐                                      │
                    │   END   │◄─────────────────────────────────────┘
                    └─────────┘
```

FIG. 25

```
          ┌──────────┐
          │  START   │
          └────┬─────┘
               │              S2502
    ┌──────────▼────────────────┐
    │  DETERMINE PREDICTION MODES│
    │ RESPECTIVELY APPLIED TO    │
    │     PREDICTION             │
    │  DIRECTIONS OF CURRENT BLOCK│
    └──────────┬─────────────────┘
               │              S2504
    ┌──────────▼────────────────┐
    │ GENERATE PREDICTION BLOCKS │
    │  FOR EACH PREDICTION       │
    │  DIRECTION, BASED          │
    │ ON REFERENCE PICTURE SET,  │
    │  AMVP                      │
    │ CANDIDATE AND MERGE CANDIDATE│
    └──────────┬─────────────────┘
               │              S2506
    ┌──────────▼────────────────┐
    │ DERIVE PREDICTION BLOCK OF │
    │     CURRENT                │
    │ BLOCK BASED ON PREDICTION  │
    │     BLOCKS                 │
    └──────────┬─────────────────┘
               │
          ┌────▼─────┐
          │   END    │
          └──────────┘
```

FIG. 26

## INTERNATIONAL SEARCH REPORT

| International application No. |
| --- |
| **PCT/KR2023/009520** |

**A. CLASSIFICATION OF SUBJECT MATTER**

**H04N 19/577**(2014.01)i; **H04N 19/513**(2014.01)i; **H04N 19/105**(2014.01)i; **H04N 19/157**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/577(2014.01); H04N 19/105(2014.01); H04N 19/109(2014.01); H04N 19/157(2014.01); H04N 19/55(2014.01); H04N 19/57(2014.01); H04N 19/583(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 블록(block), 예측(predict), 방향(direction), 후보(candidate), AMVP(advanced motion vector prediction), 병합(merge)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0113451 A (LG ELECTRONICS INC.) 15 September 2021 (2021-09-15)<br>See paragraphs [0026]-[0046], [0074], [0076], [0089], [0091], [0102]-[0103] and [0109]-[0110]; claims 1-2, 4 and 10-11; and figure 1. | 1-17 |
| Y | COBAN, Muhammed et al. Algorithm description of Enhanced Compression Model 4 (ECM 4). JVET-Y2025-v2, Joint Video Experts Team (JVET) of ITU-T SG 16 WP 3 and ISO/IEC JTC 1/SC 29, 23rd Meeting, by teleconference. pp. 1-32, 13 April 2022.<br>See pages 12, 15-16 and 19. | 1-17 |
| Y | KR 10-2014-0092876 A (QUALCOMM INCORPORATED) 24 July 2014 (2014-07-24)<br>See paragraphs [0133] and [0164]; and claim 3. | 5-8 |
| A | KR 10-2022-0051414 A (LG ELECTRONICS INC.) 26 April 2022 (2022-04-26)<br>See claims 1-7. | 1-17 |
| A | US 2020-0344492 A1 (MEDIATEK INC.) 29 October 2020 (2020-10-29)<br>See paragraph [0056]. | 1-17 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **04 October 2023** | **05 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/KR2023/009520**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>KR 10-2021-0113451 A</td><td>15 September 2021</td><td>KR 10-2022-0098255 A</td><td>11 July 2022</td></tr>
<tr><td></td><td></td><td>KR 10-2574869 B1</td><td>06 September 2023</td></tr>
<tr><td></td><td></td><td>US 11259038 B2</td><td>22 February 2022</td></tr>
<tr><td></td><td></td><td>US 2022-0141478 A1</td><td>05 May 2022</td></tr>
<tr><td></td><td></td><td>WO 2014-051372 A1</td><td>03 April 2014</td></tr>
<tr><td>KR 10-2014-0092876 A</td><td>24 July 2014</td><td>CN 104126302 A</td><td>29 October 2014</td></tr>
<tr><td></td><td></td><td>CN 104126302 B</td><td>04 August 2017</td></tr>
<tr><td></td><td></td><td>EP 2777262 A1</td><td>17 September 2014</td></tr>
<tr><td></td><td></td><td>EP 2777262 B1</td><td>17 October 2018</td></tr>
<tr><td></td><td></td><td>JP 2014-535249 A</td><td>25 December 2014</td></tr>
<tr><td></td><td></td><td>JP 5908600 B2</td><td>26 April 2016</td></tr>
<tr><td></td><td></td><td>KR 10-1626690 B1</td><td>01 June 2016</td></tr>
<tr><td></td><td></td><td>US 2013-0114717 A1</td><td>09 May 2013</td></tr>
<tr><td></td><td></td><td>WO 2013-070757 A1</td><td>16 May 2013</td></tr>
<tr><td>KR 10-2022-0051414 A</td><td>26 April 2022</td><td>CN 111903134 A</td><td>06 November 2020</td></tr>
<tr><td></td><td></td><td>EP 3742733 A1</td><td>25 November 2020</td></tr>
<tr><td></td><td></td><td>JP 2023-015383 A</td><td>31 January 2023</td></tr>
<tr><td></td><td></td><td>JP 7184911 B2</td><td>06 December 2022</td></tr>
<tr><td></td><td></td><td>KR 10-2023-0034425 A</td><td>09 March 2023</td></tr>
<tr><td></td><td></td><td>KR 10-2504741 B1</td><td>02 March 2023</td></tr>
<tr><td></td><td></td><td>US 11570429 B2</td><td>31 January 2023</td></tr>
<tr><td></td><td></td><td>US 2023-0118101 A1</td><td>20 April 2023</td></tr>
<tr><td></td><td></td><td>WO 2020-141889 A1</td><td>09 July 2020</td></tr>
<tr><td>US 2020-0344492 A1</td><td>29 October 2020</td><td>US 11432004 B2</td><td>30 August 2022</td></tr>
</table>

Form PCT/ISA/210 (patent family annex) (July 2022)